# EUROPÄISCHE PATENTANMELDUNG

(11) **EP 2 544 090 A1**
(43) Veröffentlichungstag der Anmeldung: **09.01.2013**
(21) Anmeldenummer: 12003801.3
(22) Anmeldetag: 14.05.2012
(51) Int. Cl.: G06F 11/00, G06F 11/36, G06F 9/48, G06F 11/14

(54) **Computer Sytem, computerimplementiertes Verfahren und Computerprogrammprodukt zum bestimmen eines pessimistischen Zeitverhaltens eines Fehlertoleranzmechanismus**

(30) Priorität: 03.06.2011 DE 102011103238
(71) Anmelder: Technische Universität Kaiserslautern, 67663 Kaiserslautern (DE)
(72) Erfinder: Höfig, Kai, 67655 Kaiserslautern (DE)
(74) Vertreter: Müller-Boré & Partner Patentanwälte

(57) **Zusammenfassung**

Die vorliegende Anmeldung bezieht sich auf ein computerimplementiertes Verfahren, ein Computerprogrammprodukt und ein Computer System zum Bestimmen eines pessimistischen Zeitverhaltens eines Fehlertoleranzmechanismus. In einer Ausführung umfasst das Verfahren die folgenden Schritte:
Bestimmen von Laufzeiten von ein oder mehreren Komponenten eines Systems mit Fehlertoleranzmechanismus in zumindest einem Durchlauf durch das System;
Bestimmen zumindest eines Fehlermodus für zumindest eine der Komponenten des Systems;
Generieren zumindest eines Messpunkts für den Durchlauf durch Kombination der Laufzeiten der Komponenten mit dem zumindest einen Fehlermodus.

## Beschreibung

Die vorliegende Erfindung bezieht sich generell auf sicherheitskritische eingebettete Systeme. Spezifischer bezieht sich die vorliegende Erfindung auf ein computerimplementiertes System, ein computerimplementiertes Verfahren und ein Computerprogrammprodukt zum Bestimmen eines pessimistischen Zeitverhaltens eines fehlertoleranten Mechanismus (bzw. Fehlertoleranzmechanismus) in einem sicherheitskritischen eingebetteten System.

Sicherheitskritische eingebettete Systeme sind weit verbreitet und finden Anwendung in verschiedenen Bereichen der Technik, wie beispielsweise der Automobilindustrie, der Flugzeugtechnik und/oder -sicherheit, Medizintechnik, Energieversorgung, etc. Sicherheitsanalysemodelle werden dabei verwendet, um die Sicherheit solcher Systeme zu dokumentieren und/oder zu bestimmen. Ein Nachteil sicherheitskritischer Systeme liegt darin, dass sie immer komplexer werden, beispielsweise aufgrund steigender Funktionalitäten und/oder Automatisierung von verschiedensten Industrieprozessen und/oder -produkten. Entsprechend nehmen die dazugehörigen Sicherheitsanalysemodelle in ihrer Komplexität und ihrem Detailgrad zu.

In sicherheitskritischen eingebetteten Systemen kommen oft Mechanismen zum Einsatz, die Fehler tolerieren, bearbeiten, und/oder behandeln, so genannte Fehlertoleranzmechanismen. Fehlertoleranzmechanismen umfassen eine Vielzahl von Komponenten, wobei zumindest eine der Komponenten im Falle eines Fehlers des eingebetteten Systems die entsprechende Funktionalität des Systems fortführen kann. Solche Mechanismen können zusätzlich zu einer gewünschten Funktion eines Systems implementiert werden, um auftretende Fehler zu tolerieren. Dabei können sowohl Verfahren zum Einsatz kommen, die einen Fehler erkennen, wie etwa Prüfsummen, Wertebereichüberprüfungen, Plausibilitätstests, Anforderungsüberprüfungen und/oder Laufzeittests, als auch Verfahren, die mehrere, oft parallel berechnete Ergebnisse einer Funktion miteinander vergleichen können. Da durch diese zusätzliche Funktionalität von Fehlertoleranzmechanismen in eingebetteten Systemen auch immer zusätzliche Rechenzeit mit eingeplant werden muss, wie auch für Mechanismen, die einen entdeckten Fehler beheben, beispielsweise bei als vorwärts-fehlerkorrektur klassifizierten Mechanismen durch eine parallele Berechnung redundanter Entitäten, oder bei als rückwärtsfehlerkorrektur klassifizierten Mechanismen durch eine sequentielle Berechnung redundanter Entitäten, ist eine Zeitanalyse des entsprechenden Fehlertoleranzmechanismus notwendig, um zu beweisen, dass eine gewollte Funktionalität des eingebetteten Systems trotz einer Einbindung eines Fehlertoleranzmechanismus immer noch in adäquater Zeit ausgeführt werden kann.

Eine Reihe von Ansätzen zur Lösung des Problems ist die so genannte Worst Case Execution Time (WCET)-Analyse. Dabei wird eine absolute obere Zeitschranke (also ein worst case) berechnet für eine ungünstigste anzunehmende Eingabe und einen ungünstigsten Prozessor Status des Systems. Eine absolut berechnete WCET bezieht sich auf den ungünstigsten Ausführungspfad des Fehlertoleranzmechanismus in dem eingebetteten System. Dieser Pfad kann aber möglicherweise sehr unwahrscheinlich sein und im Wesentlichen nicht auftreten bzw. nicht oder nur sehr selten eintreten. Eine solche WCET-Analyse des Fehlertoleranzmechanismus kann aber in Abhängigkeit der Anforderungen an das sicherheitskritische eingebettete System nicht immer nötig sein, so dass es bereits ausreichend sein kann, zu zeigen, dass eine geringere Ausführungszeit, die sich nur auf einen Teil des Fehlertoleranzmechanismus bezieht, ausreicht, um den Anforderungen an das sicherheitskritische eingebettete System gerecht zu werden.

Eine Wahrscheinlichkeit, dass der ungünstigste Ausführungspfad des Fehlertoleranzmechanismus in dem eingebetteten System tatsächlich eintritt, kann von Auftretenswahrscheinlichkeiten von Fehlern in dem sicherheitskritischen eingebetteten System abhängig sein. WCET-Analysen, welche Wahrscheinlichkeitswerte für unterschiedliche Ausführungszeiten des Fehlertoleranzmechanismus angeben, erlauben zwar ein Rechnen mit solchen Wahrscheinlichkeitswerten, sind aber nicht in der Lage zu beweisen und/oder zu zeigen, dass eine gewollte Funktionalität trotz einer Einbindung eines Fehlertoleranzmechanismus immer noch in adäquater Zeit ausgeführt werden kann. Das liegt daran, dass solche WCET-Analysen entweder Wahrscheinlichkeiten als benötigte Eingabe betrachten und/oder die Wahrscheinlichkeiten unzureichend berechnen, um das zuvor beschriebene Problem zu lösen.

Aufgabe der vorliegenden Erfindung ist es dementsprechend, ein computerimplementiertes System, ein computerimplementiertes Verfahren und ein Computerprogrammprodukt vorzusehen, welche beweisen können, dass ein bestimmter Overhead (Mehraufwand an (Rechen-)Laufzeit und/oder Ressourcen), welcher durch einen Fehlertoleranzmechanismus für erhöhte Sicherheit eines sicherheitskritischen eingebetteten Systems entstehen kann, für das sicherheitskritische eingebettete Systems noch akzeptabel ist und somit eine gewünschte bzw. gewollte Funktionalität in dem sicherheitskritischen eingebetteten System trotz der Einbindung des Fehlertoleranzmechanismus noch in adäquater Zeit ausgeführt werden kann.

Diese Aufgabe wird durch die Gegenstände der unabhängigen Ansprüche gelöst. Bevorzugte Ausführungsformen sind Gegenstand der abhängigen Ansprüche.

Gemäß einer Ausführungsform ist ein computerimplementiertes Verfahren zum Bestimmen eines pessimistischen Zeitverhaltens eines Fehlertoleranzmechanismus vorgesehen, welches folgende Schritte
Bestimmen von Laufzeiten von ein oder mehreren Komponenten eines Systems mit Fehlertoleranzmechanismus in zumindest einem Durchlauf durch das System;
Bestimmen zumindest eines Fehlermodus für zumindest eine der Komponenten des Systems;
Generieren zumindest eines Messpunkts für den Durchlauf durch Kombination der Laufzeiten der Komponenten mit dem zumindest einen Fehlermodus umfasst.

Entsprechend werden für einige oder alle möglichen Durchläufe durch ein System mit Fehlertoleranzmechanismus einige oder alle möglichen Kombinationen (Messpunkte) hinsichtlich möglicher Fehlermodi, die in ein oder mehreren Komponenten des betrachteten Durchlaufs des Systems auftreten können durch Kombination die einsprechenden möglichen Laufzeiten eines Durchlaufs bestimmt. Somit ergibt sich eine Übersicht über die möglichen Laufzeiten der Messpunkte eines Durchlaufs. Die Laufzeiten der beteiligten Komponenten eines Durchlaufs werden für jeden Messpunkt hinsichtlich der jeweils berücksichtigten Fehlermodi kombiniert, so dass sich verschiedene Laufzeiten für einen Durchlauf ergeben. Ferner können Wahrscheinlichkeiten für diese Messpunkte berechnet werden, um zu bestimmen, wie mit welcher Wahrscheinlichkeit überhaupt solche Messpunkte und damit die zugeordnete Laufzeit eines Durchlaufs in dem System auftreten können.

Somit kann dann bewiesen werden, dass eine Funktionalität des Systems trotz des Fehlertoleranzmechanismus immer noch in tolerierbarer Zeit ausgeführt werden kann, weil beispielsweise eine worst case Laufzeit nur mit sehr geringer Wahrscheinlichkeit eintritt.

Durch Kombinationen der Laufzeiten mit den möglichen Fehlermodi der Komponenten eines Durchlaufs durch ein System kann eine sehr detaillierte Analyse der Laufzeit des Systems vorgenommen werden. Auch kann die Analyse schnell erfolgen. Es können beliebig komplexe Sicherheitsanalysemodelle für die Bestimmung von Fehlermodi einbezogen werden. Sowohl die Generierung aller möglichen Laufzeiten für alle möglichen Messpunkte in einem System als auch die Bestimmung entsprechender Wahrscheinlichkeiten mit denen die Laufzeiten eintreten können, erfolgt automatisch. Folglich können sicherheitskritische eingebettete Systeme mit Fehlertoleranzmechanismus effizienter und kostengünstiger erzeugt werden.

Gemäß einer bevorzugten Ausführungsform umfasst der Fehlertoleranzmechanismus zumindest eine redundante Komponente und das Verfahren umfasst weiterhin: Bestimmen des zumindest einen Fehlermodus für die zumindest eine redundante Komponente.

Gemäß einer bevorzugten Ausführungsform umfasst das Verfahren weiterhin: Berechnen einer Wahrscheinlichkeit für ein Eintreten des Fehlermodus.

Gemäß einer bevorzugten Ausführungsform umfasst das Verfahren weiterhin: Berechnen einer Wahrscheinlichkeit für ein Eintreten des zumindest einen Messpunkts des Durchlaufs basierend auf der Wahrscheinlichkeit des Fehlermodus.

Gemäß einer bevorzugten Ausführungsform umfasst das Verfahren weiterhin: Bestimmen einer pessimistischen Laufzeit für den zumindest einen Durchlauf basierend auf der Wahrscheinlichkeit des Messpunkts und den entsprechenden Laufzeiten der Komponenten.

Gemäß einer bevorzugten Ausführungsform umfasst das Verfahren weiterhin: Bestimmen des Fehlermodus für die Komponente mittels eines Sicherheitsanalysemodells.

Gemäß einer bevorzugten Ausführungsform umfasst der Fehlermodus einen Ausgabe-Fehlermodus, und der Ausgabe-Fehlermodus wird durch einen Eingabe-Fehlermodus und/oder einen internen Fehlermodus der Komponente bestimmt.

Gemäß einer Ausführungsform ist ein Computerprogrammprodukt vorgesehen, welches insbesondere auf einem computerlesbaren Medium gespeichert oder als Signal verwirklicht ist, welches, wenn geladen in den Speicher eines Computers und ausgeführt von einem Computer, bewirkt, dass der Computer ein erfindungsgemäßes Verfahren durchführt.

Gemäß einer Ausführungsform ist ein Computer System zum Bestimmen eines pessimistischen Zeitverhaltens eines Fehlertoleranzmechanismus vorgesehen. Das System umfasst:
eine Messvorrichtung, welche ausgebildet ist, Laufzeiten von ein oder mehreren Komponenten eines Systems mit Fehlertoleranzmechanismus in zumindest einem Durchlauf durch das System zu bestimmen;
ein Sicherheitsanalysemodell, welches ausgebildet ist, zumindest einen Fehlermodus für zumindest eine der Komponenten des Systems zu bestimmen; und
einen Prozessor, welcher ausgebildet ist, zumindest einen Messpunkt für den Durchlauf durch Kombination der Laufzeiten der Komponenten mit dem zumindest einen Fehlermodus zu generieren.

Bevorzugte Ausführungsformen werden im Folgenden mit Bezug auf begleitende Zeichnungen beispielhaft beschrieben. Es wird angemerkt, dass selbst wenn Ausführungsformen separat beschrieben sind, einzelne Merkmale davon zu zusätzlichen Ausführungsformen kombiniert werden können. Es zeigen:
Figuren 1A und 1B ein internes Blockdiagramm eines exemplarischen sicherheitskritischen eingebetteten Systems mit einem Fehlertoleranzmechanismus.
Figur 2 ein Sicherheitsanalysemodell zu einem exemplarischen sicherheitskritischen eingebetteten System mit einem Fehlertoleranzmechanismus wie in Figuren 1A und 1B gezeigt.
Figuren 3A und 3B Tabellen einer Zeitanalyse eines exemplarischen sicherheitskritischen eingebetteten Systems mit einem Fehlertoleranzmechanismus wie in Figuren 1A und 1B gezeigt.
Figur 4 zeigt ein exemplarisches Meta-Modell zur Annotation eines sicherheitskritischen eingebetteten Systems mit einem Fehlertoleranzmechanismus.
Figur 5A zeigt ein exemplarisches sicherheitskritisches eingebettetes System mit einem Fehlertoleranzmechanismus.
Figur 5B zeigt eine exemplarische interne, annotierte Darstellung des sicherheitskritischen eingebetteten Systems mit einem Fehlertoleranzmechanismus von Figur 5A.
Figur 5C zeigt eine exemplarische tabellarische Annotation oder Auszeichnung von Komponenten des sicherheitskritischen eingebetteten Systems mit einem Fehlertoleranzmechanismus von Figur 5A für die interne Darstellung.
Figur 5D zeigt eine exemplarische tabellarische Annotation von möglichen Durchläufen durch das sicherheitskritische eingebettete System mit einem Fehlertoleranzmechanismus von Figur 5A.
Figur 6 zeigt eine exemplarische Sicherheitsanalyse einer Komponente des sicherheitskritischen eingebetteten Systems mit einem Fehlertoleranzmechanismus von Figur 5A.
Figuren 7A bis 7F zeigen eine exemplarische Analyse des sicherheitskritischen eingebetteten Systems mit einem Fehlertoleranzmechanismus von Figur 5A unter Verwendung durch das System hinzugefügte oder ausgezeichnete Annotationen.
Figur 8 ein Computer-Netzwerk zur Implementierung eines System zur individuellen und zeitunabhängigen Nutzung von Medieninhalten.

Im Folgenden werden einige technische Begriffe eingeführt, die in der Anmeldung im Weiteren verwendet werden.

### (Sicherheitskritisches) Eingebettetes System

Ein eingebettetes System kann sich auf einen elektronischen Rechner und/oder Computer beziehen, der in einen technischen Kontext bzw. Zusammenhang eingebunden und damit eingebettet ist. Der Computer kann dabei die Aufgabe haben, das System, in welches der Computer eingebettet ist, zu steuern, zu regeln und/oder zu überwachen. Zusätzlich und/oder alternativ kann der Computer in dem System, in das der Computer eingebettet ist, für eine Form der Daten- und/oder Signalverarbeitung zuständig sein, beispielsweise beim Ver- und Entschlüsseln von Daten, beim Codieren und Dekodieren von Daten, und/oder beim Filtern von Daten. Eingebettete Systeme können, weitgehend unsichtbar für einen Benutzer, eine Vielzahl von Diensten in verschiedenen Anwendungsbereichen und/oder Geräten verrichten, beispielsweise in Geräten der Medizintechnik, in Waschmaschinen, in Flugzeugen, in Kraftfahrzeugen, in Kühlschränken, in Fernseher und/oder anderen Geräten der elektronischen Unterhaltungsindustrie, in Energieversorgungsnetzen, Produktionsanlagen, etc. Bei komplexen Gesamtsystemen kann es sich dabei um eine Vernetzung einer Vielzahl von ansonsten autonomen, eingebetteten Systemen handeln (z.B. in einem Flugzeug und/oder Kraftfahrzeugen).

Kommen eingebettete Systeme in Geräten und/oder Anwendungsbereichen zum Einsatz, die hohe Sicherheitsanforderungen haben, z.B. in Flugzeugen, Nahverkehrssystemen, Geräten der Medizintechnik, etc., so werden eingebettete Systeme auch als sicherheitskritische eingebettete Systeme bezeichnet.

### Fehlertoleranz/Fehlertoleranzmechanismus

In der Technik, v. a. in der elektronischen Datenverarbeitung, kann sich Fehlertoleranz generell auf die Eigenschaft eines technischen Systems (z.B. eines sicherheitskritischen eingebetteten Systems) beziehen, eine Funktionsweise und/oder Funktionalität des Systems auch dann aufrechtzuerhalten, wenn unvorhergesehene Eingaben und/oder Fehler in der Hardware und/oder Software des Systems liegen. Neben der Möglichkeit die Zuverlässigkeit eines Systems zu erhöhen, kann Fehlertoleranz auch eine Voraussetzung für Hochverfügbarkeit, wie beispielsweise in der Telekommunikationstechnik eine wichtige Rolle spielen.

Fehlertoleranz kann durch Einsatz verschiedener Fehlertoleranzmechanismen und/oder auf verschiedenen Ebenen (z.B. Hardware, Software, Benutzerschnittstellen) eines Systems erreicht werden.

Bei der Reaktion und/oder Korrektur von Fehlern in einem System (z.B. einem sicherheitskritischen eingebetteten System) können zumindest zwei Prinzipien auftreten: Vorwärts- und Rückwärtsfehlerkorrektur.

Bei einem vorwärtskorrektur-basierten Fehlertoleranzmechanismus versucht das System, in das der Fehlertoleranzmechanismus eingebunden ist, so weiterzumachen, als ob kein Fehler aufgetreten wäre, beispielsweise indem im Wesentlichen im Moment, in dem ein Fehler auftritt, ein korrekt funktionierendes Ersatzsystem weiterarbeitet.

Bei einem rückwärtskorrektur-basierten Fehlertoleranzmechanismus versucht das System, in das der Fehlertoleranzmechanismus eingebunden ist, beim Auftreten eines Fehlers in einen Zustand vor diesem Auftreten zurückzukehren, um die entsprechende Berechnung erneut auszuführen. Genauso ist aber auch ein Zustandswechsel in einen Notbetrieb und/oder ein Reboot des Systems möglich.

Die im System auftretenden Fehler bleiben für einen Benutzer unsichtbar.

Um die zuvor beschriebene Unsichtbarkeit von Fehlern gegenüber dem Benutzer zu erreichen, werden zunächst Verfahren zur Fehlererkennung durchgeführt. Diese können beispielsweise integraler Bestandteil eines Fehlertoleranzmechanismus sein und können unterschieden werden in: Prüfsummen, die es erlauben, fehlerhafte Datentypen zu erkennen, Wertebereich Überprüfungen, die Fehler erkennen, die auf einen Wertebereich zurückzuführen sind, welcher unter realen Umständen unmöglich erscheint, Plausibilitätstests allgemein, Überprüfen von zur Entwicklung des Systems weiteren bekannten Anforderungen und Laufzeittests, die beispielsweise ungültige Rechenoperationen abfangen.

Im Folgenden kann ein System ein sicherheitskritisches eingebettetes System mit eingebundenem Fehlertoleranzmechanismus bezeichnen.

### Sicherheitsanalysemodelle

Sicherheitsanalysemodelle können verwendet werden, um die Sicherheit eines sicherheitskritischen eingebetteten Systems zu analysieren. Es gibt verschiedene solcher Analysemodelle. Ein Beispiel eines Sicherheitsanalysemodels ist eine Fehlerbaumanalyse. Die Fehlerbaumanalyse kann als ein deduktives Verfahren beschrieben werden, um eine Wahrscheinlichkeit eines Ausfalls eines (sicherheitskritischen eingebetteten) Systems zu bestimmen. Die Fehlerbaumanalyse impliziert in einem System ein unerwünschtes (fehlerhaftes) Ereignis und sucht nach allen kritischen Pfaden, die dieses Ereignis auslösen könnten. Die Fehlerbaumanalyse ist eine Art einer Sicherheitsanalyse und in der DIN 25424 beschrieben.

Eine komponenten-basierte Fehlerbaumanalyse (component fault trees, CFT) kann sich auf einzelne Teile und/oder Komponenten eines Fehlerbaums und/oder Fehlermodi von Komponenten und/oder Eingabe-/Ausgabestellen (ports) von Komponenten und/oder dem ganzen System, das mit der Analyse analysiert wird, beziehen.

Beispiele weiterer Sicherheitsanalysemodelle umfassen verallgemeinerte stochastische Petri Netze und/oder Markov Ketten.

### Ausführungspfad/Durchlauf

Ein Ausführungspfad bzw. Durchlauf durch ein System kann eine Ausführung des Systems definieren, wobei der Ausführungspfad an einer Eingabe des Systems beginnt, ein oder mehrere Komponenten des Systems durchläuft und an einer terminierenden Ausgabe des Systems endet. Ein Durchlauf ist somit als endlicher Pfad durch Komponenten des Systems darstellbar.

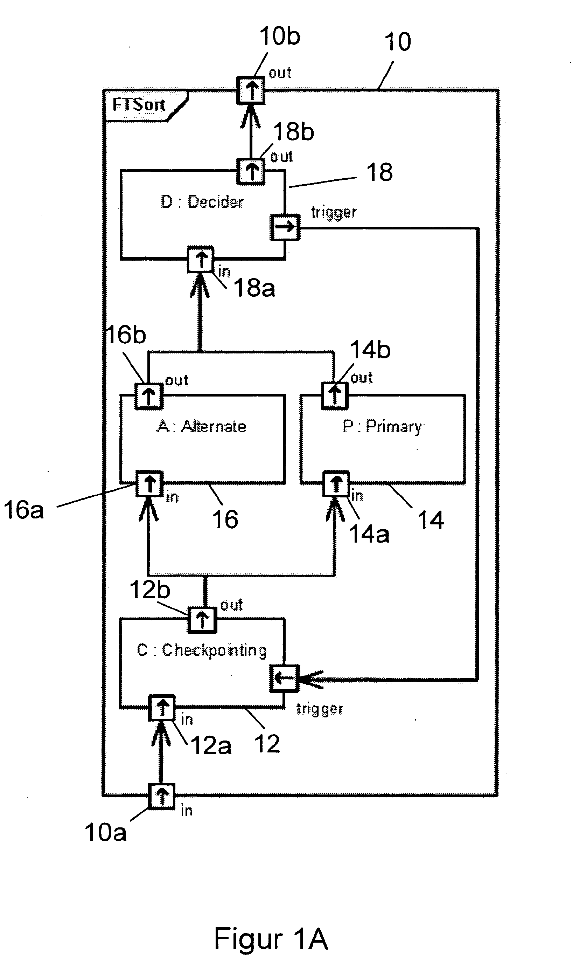

**Figur 1A** zeigt eine interne Darstellung mittels eines Blockdiagramms eines (stark vereinfachten) sicherheitskritischen eingebetteten Systems 10. Die interne Darstellung des eingebetteten Systems umfasst ein oder mehrere Komponenten 10, 12, 14, 16, 18. In einer beispielhaften Implementierung umfasst das eingebettete System eine System Komponente 10, eine Decider Komponente 18, eine Primary Komponente 12, eine Alternate Komponente 14 und eine Checkpointing Komponente 12. Die System Komponente 10 beschreibt das sicherheitskritische eingebettete System in der internen Darstellung selbst. Die Komponenten 12, 14, 16, und 18 können auch als Subkomponenten (der Komponente 10) bezeichnet werden.

Die interne Darstellung des eingebetteten Systems 10 zeigt insbesondere einen Sortiermechanismus, welcher eine fehlertolerante Sortierung von Arrays (im Wesentlichen Datenstrukturen in Form von Feldern) implementiert, um zwei verschiedene Sortieralgorithmen, welche in den Komponenten Alternate 16 und Primary 14 ausgeführt werden. Diese Komponente 14 und 16 können daher auch als redundante Komponenten 14, 16 bezeichnet werden.

Wenn das eingebettete System mit einem zu sortierenden Array aufgerufen wird, beginnt das System eine entsprechende Ausführung durch Speichern des hineinkommenden Arrays in der Checkpointing Komponente 12. Das gespeicherte Array wird dann an die Primary Komponente 14 zum Sortieren des Arrays übergeben. Nachdem die Primary Komponente 14 eine Sortierung des Arrays berechnet hat, schickt sie das Ergebnis an die Decider Komponente 18. Die Decider Komponente 18 überprüft, ob das Array korrekt sortiert wurde. Ist das Ergebnis korrekt, gibt es ein Ergebnis des Sortiersystems und das System terminiert. Wenn beim Überprüfen durch die Decider Komponente 18 festgestellt wird, dass das Array von der Primary Komponente 14 nicht korrekt sortiert wurde, wird ein Fehler zurückgegeben. Da das System fehlertolerant ist, triggert und/oder veranlasst die Decider Komponente 18 die Checkpointing Komponente 12, das eingangs empfangene Array erneut aus dem Speicher zu laden und es an die Alternate Komponente 16 zur Berechnung eines sortierten Arrays des empfangenen Arrays zu senden.

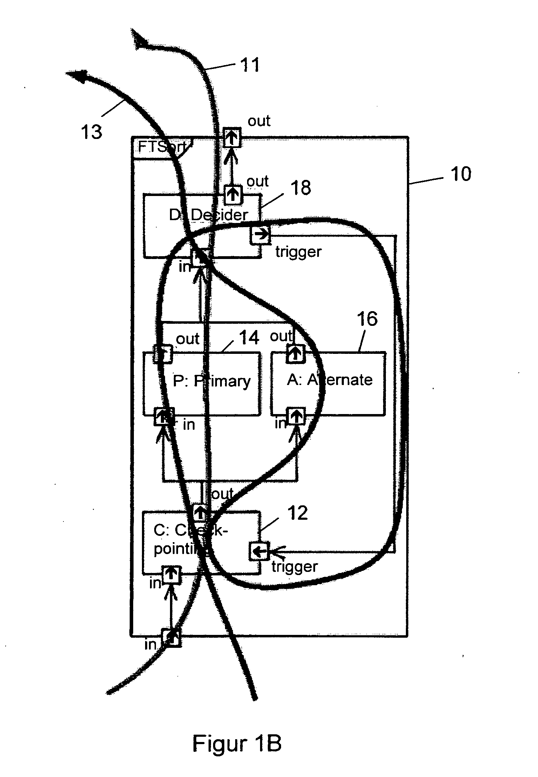

**Figur 1B** zeigt zwei verschiedene Ausführungspfade bzw. Durchläufe 11, 13 durch das System 10. Ein erster Ausführungspfad 11 bezieht sich auf einen normalen, d.h. fehlerfreien Durchlauf durch das System, bei dem die Primary Komponente 14 korrekt arbeitete und ein sortiertes Array des Eingabearrays zurückgibt. Ein zweiter Ausführungspfad 13 zeigt einen Durchlauf durch das System, wenn eine Fehlerbedingung eintritt, also die Primary Komponente 14 kein sortiertes Array des Eingabearrays zurückgibt. In diesem Fall triggert, wie zuvor mit Bezug auf Figur 1A beschrieben, die Decider Komponente 18 die Checkpointing Komponente 12, das Eingabearray an die Alternate Komponente 16 zur Berechnung eines sortierten Arrays von dem Eingabearray zu berechnen. Im Fall des vorliegenden sicherheitskritischen eingebetteten Systems, beschreibt der zweite Ausführungspfad 13 den schlecht möglichsten Fall und die dazugehörige Laufzeit eine worst case execution time (WCET), also eine absolute untere Schranke für eine maximale Laufzeit des Systems 10. In diesem Fall wird also eine längst mögliche Laufzeit für alle Komponenten des Systems unter den schlecht-möglichsten Bedingungen angenommen.

Für komplexe sicherheitskritische eingebettete Systeme mit einem eingebundenen Fehlertoleranzmechanismus ist die Annahme einer WCET zur Bestimmung der Laufzeit des Systems nicht immer notwendig, wenn das entsprechende Ereignis nur in einem sehr unwahrscheinlichen Fall eintritt. Daher kann es notwendig sein, ein sicherheitskritisches eingebettetes System mit einem Fehlertoleranzmechanismus dahingehend zu analysieren, wie wahrscheinlich bestimmte Durchläufe sind, um dann nicht die WCET sondern vielmehr eine pessimistische Laufzeit für das System zu bestimmen. Damit kann dann begründet und/oder bewiesen werden, dass eine gewünschte Funktionalität des Systems trotz Einbindung eines Fehlertoleranzmechanismus noch in adäquater (durch die pessimistische Laufzeit bestimmte) Zeit ausgeführt werden kann.

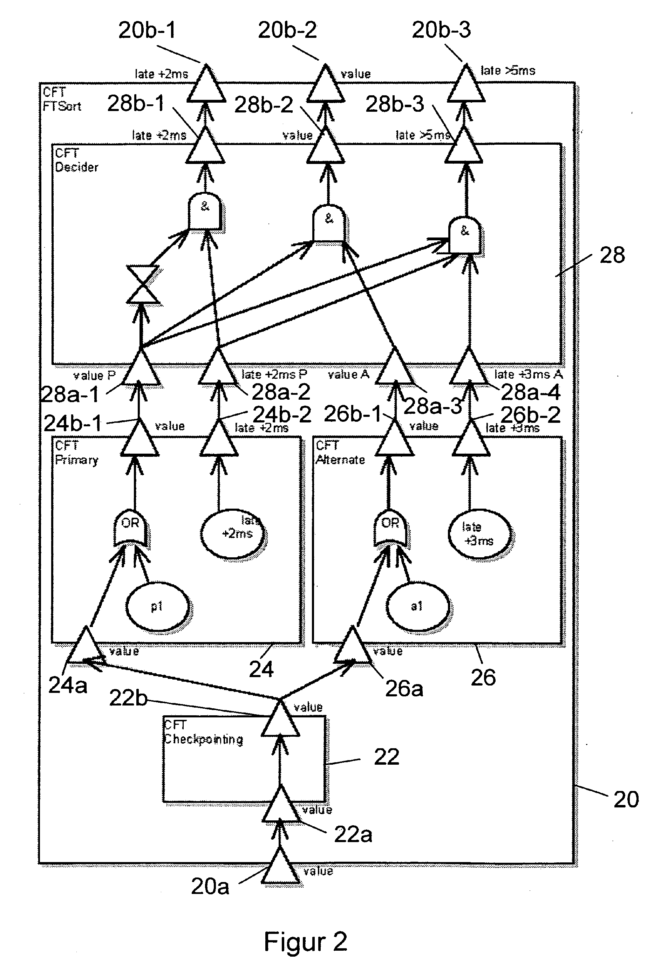

**Figur 2** zeigt eine exemplarische Darstellung eines Sicherheitsanalysemodells für ein sicherheitskritisches eingebettetes System 10 mit Fehlertoleranzmechanismus wie in Figur 1A gezeigt. Es wird in dem gezeigten Beispiel eine komponenten-basierte Fehlerbaumanalyse (component fault trees, CFT) verwendet. Jede Komponente 10, 12, 14, 16, 18 des Systems 10 hat in dem Sicherheitsanalysemodell eine zugeordnete und/oder entsprechende CFT Komponente 20, 22, 24, 26, 28. Jede der CFT Komponenten umfasst einen oder mehrere Eingabe-Fehlermodi 20a, 22a, 24a, 26a, 28a und einen oder mehrere Ausgabe-Fehlermodi 20b, 22b, 24b, 26b, 28b. Die Fehlermodi 20a, 22a, 24a, 26,a, 28a, 20b, 22b, 24b, 26b, 28b sind den entsprechenden Eingabe-/Ausgabestellen 10a, 12a, 14a, 16a, 18a, 10b, 12b, 14b, 16b, 18b der Komponenten 10, 12, 14, 16, 18 des eingebetteten Systems zugeordnet bzw. entsprechen diesen. Somit ist zum Beispiel die Primary Komponente 14 durch die entsprechende CFT (Primary) Komponente 24 in dem Sicherheitsanalysemodell spezifiziert und die Ausgabestelle 24b der Primary Komponente 14 ist beispielsweise durch die entsprechenden Ausgabe-Fehlermodi 24b-1 und 24b-2 der entsprechenden CFT (Primary) Komponente 24 spezifiziert.

Innerhalb einer CFT Komponente 20, 22, 24, 26, 28 wird ein Fehlerbaum-Tor verwendet, um ein Fehlerverhalten der entsprechenden Komponente 10, 12, 14, 16, 18 des Systems zu modellieren. Beispielsweise wenn die Primary Komponente 14 kein korrekt sortiertes Array des Eingabearrays berechnete, wird ein Fehlerwert an der Ausgabestelle 14b ausgegeben. Bei einem solche Fehlerwert an der Ausgabestelle 14b der Primary Komponente 14 erscheint im entsprechenden Sicherheitsanalysemodell in der CFT (Primary) Komponente 24 ein Fehlermodus p1 oder (OR-Tor in der CFT Komponente 24) die Komponente 14 hat einen fehlerhaften Eingabewert an ihrer Eingabestelle 14a erhalten. Der entsprechende Ausgabe-Fehlermodus der CFT (Primary) Komponente 24 ist in diesem Fall 24a. Entsprechend sind die anderen gezeigten Fehlerbaum-Tore der Figur 2 zu lesen. Beispielsweise erzeugt bei Analyse des in Figur 2 gezeigten Sicherheitsanalysemodells die System Komponente 10 einen Fehlerwert an einem Ausgabe-Fehlermodus 20b-2 der entsprechenden CFT System Komponente 20, wenn die internen Fehlermodi p1 und a1 der CFT Komponenten Primary und Alternate 24 und 26 eintreten oder wenn die jeweiligen Eingangswerte an den Eingangs-Fehlermodi 24a, 26a, 28a1, 28a-3 fehlerhaft sind (vergleiche einen Pfad zu dem zweites Und-Tor der CFT Decider Komponente 28 in dem gezeigten

Sicherheitsanalysemodell).

Zusätzlich zu den internen Fehlermodi p1 und a1 der CFT Primary und Alternate Komponente 24 und 26 können die CFT Primary und Alternate Komponente 24 und 26 jeweils einen Zeitfehler late+2ms und entsprechend late+3ms erzeugen. Dementsprechend ist die CFT Primary Komponente 24 (und damit auch die Primary Komponente 14 des Systems selbst) 2 Millisekunden verspätet, wenn ein Fehlermodus p2 erscheint. Ebenso ist die CFT Alternate Komponente 26 (und damit auch die Alternate Komponente 16 des Systems selbst) 3 Millisekunden verspätet, wenn ein Fehlermodus a2 erscheint.

Die Ausgabe Fehlermodi late+2ms 20b-1 und late>5ms 20b-3 der CFT System Komponente 20 (also an der Ausgabestelle 10b der System Komponente 10 in dem entsprechenden System wie in Figur 1A modelliert) bieten eine weitere Sicht auf das Laufzeitverhalten des gesamten sicherheitskritischen eingebetteten Systems. Wie aus Figur 2 ersichtlich, ist das gesamte System 2 Millisekunden verspätet (Ausgabe-Fehlermodus 20b-1), wenn beispielsweise der Fehlermodus p2 der CFT Primary Komponente 24 aktiv ist und kein Ausgabefehler der Primary Komponente 14 (modelliert durch Ausgabe-Fehlermodus 24b-2 des entsprechenden Sicherheitsanalysemodels) auftritt. Wie weiterhin aus Figur 2 zu entnehmen ist, ist das gesamte System mindestens 5 Millisekunden verspätet, (Ausgabe-Fehlermodus 20b-3), wenn die Primary Komponente 14 einen Fehlerwert bei der Ausgabe erzeugt (modelliert durch den entsprechenden Ausgabe-Fehlermodus 24b-1 der entsprechenden CFT Primary Komponente 24) und wenn dann in der nachfolgenden Berechnung des sortierten Arrays die Alternate Komponente 16 verspätet ist (Fehlermodus a2 in der entsprechenden CFT Alternate Komponente 26). In diesem Fall, gehen die Eingabe-Fehlermodi 28a-2 und 28a-4 in die CFT Decider Komponente 28 ein und werden in dem entsprechenden UND-Tor in den Ausgabe-Fehlermodus 20b-3 aggregiert.

Auch wenn die Fehlermodi 20a, 22a, 24a, 26,a, 28a, 20b, 22b, 24b, 26b, 28b des Sicherheitsanalysemodells eine detaillierte Analyse möglicher Fehler bei der Berechnung eines sortierten Arrays von einem Eingabewert durch das entsprechende System ermöglichen, können die Fehlermodi 20a, 22a, 24a, 26,a, 28a, 20b, 22b, 24b, 26b, 28b aber nicht dazu verwendet werden, ein Laufzeitverhalten für dieses System zu beschreiben und/oder zu bestimmen. Beispielsweise kann der Fehlermodus 20b-3 der CFT System Komponente 20 stark von einer Laufzeit der Primary Decider und/oder Checkpointing Komponenten 12, 14, 18 abhängen. Wenn nun beispielsweise die Primary Komponente 14 des sicherheitskritischen eingebetteten Systems zur Ausführung 500 Millisekunden benötigt, ist die tatsächliche Laufzeitverlängerung des Systems viel größer als zumindest 5 Millisekunden.

Das Sicherheitsanalysemodell, wie in Figur 2 gezeigt, erzeugt Fehlermodi 20a, 22a, 24a, 26a, 28a, 20b, 22b, 24b, 26b, 28b an Eingabe- und Ausgabestelle und interne Fehlermodi p1, p2, a1, a2 der einzelnen redundanten Komponenten 14, 16, die eine zusätzliche Laufzeit erzeugen. Eine Erzeugung von absoluten Werten kann deshalb äußerst fehleranfällig und zeitaufwendig sein. Insbesondere müssten Laufzeiten und/oder zusätzliche Zeitfehler in diese Berechnungen einbezogen werden, welche den Vorgang zusätzlich komplizierter machen würden.

Um das zuvor beschriebene Problem einer Laufzeitanalyse mittels Fehlermodi eines Sicherheitsanalysemodells für ein eingebettetes System mit einem Fehlertoleranzmechanismus zu lösen, wird im folgenden ein System und ein Verfahren beschrieben, welche automatisch Laufzeiten von Komponenten des Systems mit entsprechenden Fehlermodi der Komponenten eines zugeordneten (bzw. das System beschreibenden und analysierenden) Sicherheitsanalysemodells kombiniert, um ein pessimistisches Laufzeitverhalten für das System zu bestimmen.

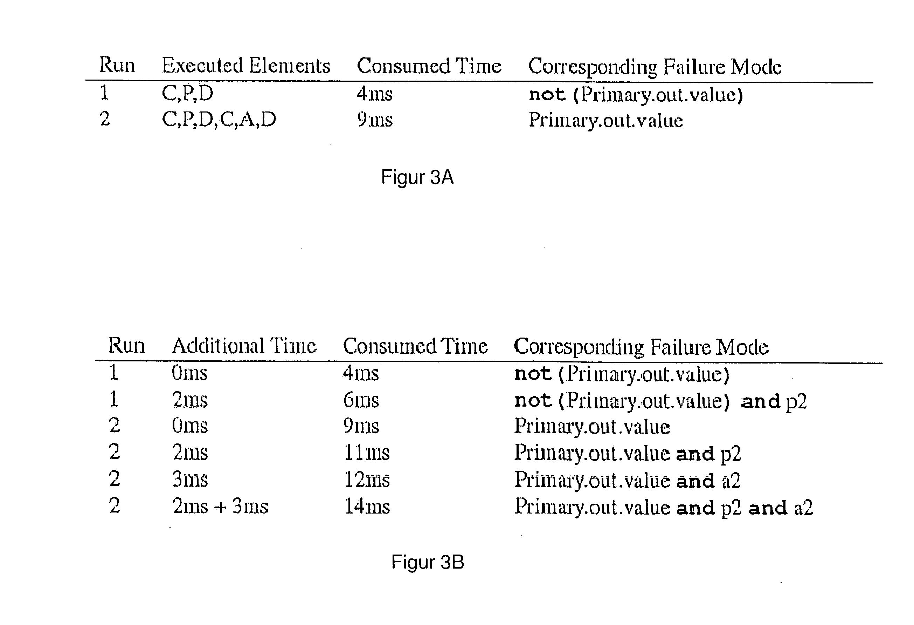

Aus den Erläuterungen zu Figuren 1A, 1B und 2 wird ersichtlich, dass zumindest einige Fehlermodi in einem Sicherheitsanalysemodell bestimmten Modi des Fehlertoleranzmechanismus in dem System 10 entsprechen. Beispielsweise entspricht der einen falschen Ausgabewert betreffende Fehlermodus 24a-1 der CFT Primary Komponente 24, dem Modus in dem die Alternate Komponente 16 von der Decider Komponente 18 aufgerufen wird, um diesen fehlerhaften Wert zu berichtigen. Entsprechend ist, wenn dieser Fehlermodus 24a-1 nicht aktiv ist, der Fehlertoleranzmechanismus des Systems in einem anderen Modus, in dem nur die Primary Komponente 14 (der beiden redundanten Komponenten 14 und 16) ausgeführt wird. Um Laufzeiten des Systems mit dem Fehlertoleranzmechanismus zu untersuchen und/oder automatisch zu ermitteln, wird die Menge von ausgeführten Komponenten 12, 14, 16, 18 des Systems für die zuvor beschriebenen beiden Modi des Fehlertoleranzmechanismus als Eingabe für das Verfahren verwendet. Diese Menge wird als Laufzeitmenge bzw. als Menge möglicher Durchläufe bezeichnet und ist für das System mit Fehlertoleranzmechanismus von Figur 1A in **Figur 3A** gezeigt.

In Figur 3A sind zwei verschiedene Durchläufe 1 und 2 durch das System 10 von Figur 1A gezeigt. Die Laufzeit für einen Durchlauf wird bestimmt durch die Laufzeiten der einzelnen Komponenten 12, 14, 16, 18 des Systems (genauer, durch die Laufzeiten der Subkomponenten 12, 14, 16, 18 der System Komponente 10). Für den Fehlertoleranzmechanismus des Systems in Figur 1A werden folgende Laufzeiten der Komponenten 12, 14, 16, 18 angenommen: Checkpointing (bzw. C) Komponente 12: 1 ms, Primary (bzw. P) Komponente 14: 2ms, Alternate (bzw. A) Komponente 16: 3ms, Decider (bzw. D) Komponente 18: 1 ms. Damit umfasst der erste Durchlauf 1, welcher die Komponente Checkpointing 12, Primary 14 und Decider 18 umfasst, eine Laufzeit von 4ms und der zweite Durchlauf 2, welcher zusätzliche die Alternate Komponente 16 umfasst (mit einem Durchlauf durch die Komponenten in der Reihenfolge Checkpointing 12, Primary 14, Decider 18, Checkpointing 12, Alternate 16 und Decider 18), eine Laufzeit von 9ms.

Dadurch dass, wie in Figur 2 gezeigt, in dem entsprechenden Sicherheitsanalysemodell die CFT Primary und Alternate Komponenten 24, 26 (und damit auch die Primary und die Alternate Komponenten 14 und 16 des Systems selbst) interne Fehlermodi p2 (late+2ms) und a2 (late+3ms) umfassen, sind sechs verschiedene Laufzeiten für den Fehlertoleranzmechanismus des Systems 10 möglich. Diese Laufzeiten sind in **Figur 3B** gezeigt. Damit ist eine detaillierte Sicht auf mögliche Laufzeiten des Fehlertoleranzmechanismus des Systems 10 aus Figur 1A möglich. Insbesondere kann die in Figur 3B gezeigte Tabelle verwendet werden, um direkt eine Trade-off-Analyse eines Fehlertoleranzmechanismus in Bezug auf eine verbesserte Sicherheit des zugrundeliegenden Systems einerseits und eine längere Laufzeit andererseits durchzuführen.

Allerdings, wenn weitere Komponenten und/oder Fehlermodi hinzukommen, würde die Tabelle in Figur 3B schnell expandieren. Eine größere Anzahl solcher Kombinationen manuell zu berechnen, wäre daher fehleranfällig und/oder zeitaufwendig. Im folgenden wird ein Verfahren beschrieben, wie eine solche Tabelle (beispielsweise die Tabelle in Figur 3B) automatisch generiert werden kann, wenn die Anzahl der Durchläufe durch ein System und entsprechende Fehlermodi von Komponenten des Systems bekannt sind und interne Fehlermodi mittels absoluter Laufzeiten quantifiziert sind.

Um alle möglichen Kombinationen von Ausführungszeiten für ein System mit einem Fehlertoleranzmechanismus automatisch zu bestimmen und/oder zu generieren, werden für jeden möglichen Durchlauf durch das System, die entsprechenden möglichen Ausführungszeiten der beteiligten Komponenten automatisch kombiniert. Eine Komponente eines Fehlertoleranzmechanismus eines Systems umfasst ihre eigene Laufzeit, eine jeweilige Laufzeit von möglichen (sowohl interne als auch Ein-/Ausgabe) Fehlermodi der Komponente, einen Booleschen Wert, welcher anzeigt, ob ein entsprechender Fehlermodus der Komponente aktiv ist oder nicht und/oder eine jeweilige zusätzliche Laufzeit der Komponente, wenn einer der jeweiligen Fehlermodi aktiv ist. Beispielsweise hat der Fehlertoleranzmechanismus des Systems von Figur 1A zwei verschiedene mögliche Durchläufe 1 und 2, wie sie in Figur 3A gezeigt sind. Beispielsweise hat im zuvor beschriebenen Beispiel mit Bezug auf Figuren 1 bis 3 die Primary Komponente 14 eine Laufzeit von 2 ms. Die Primary Komponente 14 hat einen Fehlermodus p1 mit zusätzlicher Laufzeit von 2ms, so dass die Primary Komponente 14 eine zusätzliche Laufzeit mit aktivem Fehlermodus p2 von 4ms hat.

Mit dieser Kombination von möglichen Ausführungszeiten für ein System mit Fehlertoleranzmechanismus können entgegen herkömmlicher WCET-Analysen zur Bestimmung von Laufzeiten eines Systems mit Fehlertoleranzmechanismus Ausführungszeiten der Komponenten kombiniert werden, indem sie einfach aufsummiert und/oder addiert werden, wobei die verschiedenen Ausführungszeiten mit entsprechenden Fehlermodi kombiniert werden.

Die Erzeugung von verschiedenen möglichen Durchläufen unter Berücksichtigung verschiedener möglicher Fehlermodi eines Systems mit Fehlertoleranzmechanismus bietet eine detaillierte Sicht auf eine zusätzliche Laufzeit des Systems. Die automatische Generierung von verschiedenen möglichen Alternativen durch die Kombination von Laufzeiten der Komponenten und zusätzlichen Laufzeiten von möglichen Fehlermodi der Komponenten des Fehlertoleranzmechanismus ist weniger fehleranfällig als ein manueller Ansatz und kann mit einer Vielzahl von Kombinationen, einer Vielzahl von Komponenten und/oder einer Vielzahl möglicher Fehlermodi der Komponenten effizient rechnen.

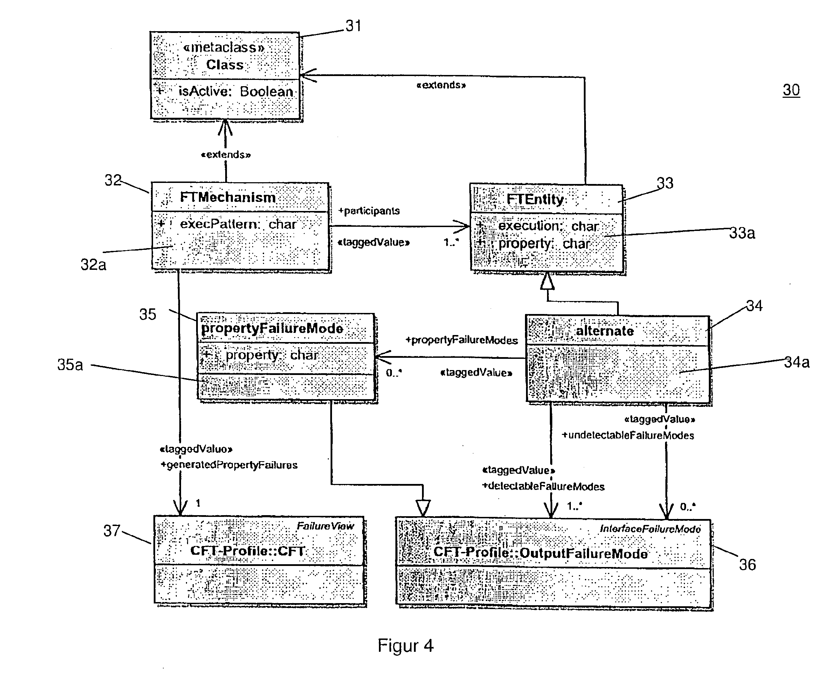

**Figur 4** zeigt ein Meta-Modell 30, welches verwendet werden kann, Komponenten eines Fehlertoleranzmechanismus mit Daten und/oder Informationen zu annotieren und/oder auszuzeichnen, um eine automatische Generierung aller möglichen Durchläufe durch ein System mit Fehlertoleranzmechanismus zu ermöglichen. Die automatisch generierten Durchläufe werden automatisch mit Laufzeiten ausgezeichnet und/oder annotiert, um eine effiziente und detaillierte Laufzeitanalyse bereitzustellen. Die möglichen Durchläufe und ihre zugeordneten Laufzeiten können weiterhin mit entsprechenden Wahrscheinlichkeitswerten ausgezeichnet werden. Damit kann dann bestimmt werden, wie wahrscheinlich eine Laufzeit des analysierten Systems überhaupt ist, so dass eine pessimistische Laufzeitanalyse für ein fehlertolerantes System bestimmt werden kann.

Das Meta-Modell 30 umfasst ein oder mehrere Elemente 31, 32, 33, 34, 35, 36, 37. Beispielsweise kann das Meta-Modell 30, ein Profil für die Unified Modeling Language (UML) definieren, um Elemente 31, 32, 33, 34, 35, 36, 37 des Meta-Modells 30 als Stereotypen auf Klassenelemente in einem UML-Diagramm anzuwenden. Das Meta-Modell 30 kann dazu verwendet werden, ein sicherheitskritisches eingebettetes System mit einem Fehlertoleranzmechanismus semantisch anzureichern bzw. zu annotieren, um eine automatische Sicherheits- und/oder Laufzeitanalyse eines Fehlertoleranzmechanismus in der zuvor beschriebenen Weise durchführen zu können. Attribute 32a, 33a, 34a, 35a, 36a, 37a der Elemente 31, 32, 33, 34, 35, 36, 37 des Meta-Modells werden zu ausgezeichneten Werten, wenn ein Element 31, 32, 33, 34, 35, 36, 37 des Meta-Modells 30 als Stereotyp auf eine Komponente eines Models eines eingebetteten Systems angewendet wird. Solche ausgezeichneten Werte können dann dazu verwendet werden, spezifische semantische Informationen zu dem Model des eingebetteten Systems hinzuzufügen. Damit können dann von dem so annotierten Modell des eingebetteten Systems mögliche Laufzeiten mit Wahrscheinlichkeiten bestimmt und/oder abgeleitet werden.

Das Meta-Modell 30 umfasst zumindest zwei Elemente 33 und 36, ein FTEntity Element 33, welches einen Teil der fehlerabhängigen Funktionalität des Systems als Komponente oder allgemein als Teil des Gesamtsystems identifiziert und ein CFT-Profile::OutputFailureMode Element 36, das den zu dieser fehlerabhängigen Teilfunktionalität entsprechenden Fehlermodus eines Sicherheitsanalysemodells identifiziert.

Ein FTMechanism Element 32 des Meta-Modells 30 kapselt ein oder mehrere oder alle Komponenten eines Fehlertoleranzmechanismus. Ein solches Kapseln oder Einkapseln der Komponenten des Fehlertoleranzmechanismus kann notwendig sein, um ein Ergebnis einer Analyse eines Laufzeitverhaltens des Fehlertoleranzmechanismus einzubetten, so dass sie für eine vorausgehende Sicherheitsanalyse mittels eines komponenten-basierten Fehlerbaums (CFT) verwendet werden können. Das FTMechanism Element 32 umfasst ein oder mehrere FTMechanism Attribute 32a, von denen in Figur 4 exemplarisch eins gezeigt ist. In einer Implementierung kann das FTMechanism Elemente 32 folgende FTMechanism Attribute 32a umfassen. Ein participants Attribut, welche ein oder mehrere Komponenten des zu modellierenden Fehlertoleranzmechanismus beschreibt, ein generatePropertiesFailures Attribut, welches generierte Ergebnisse speichert, und ein execPattern Attribut, welches ein oder mehrere mögliche erfolgreiche Durchläufe redundanter Komponenten des zu modellierenden Fehlertoleranzmechanismus darstellt und/oder modelliert. Eine erfolgreiche Ausführung des Fehlertoleranzmechanismus, also ein Durchlauf, umfasst zumindest eine erfolgreich ausgeführte redundante Komponente und ein oder mehrere redundante Komponenten, die fehlgeschlagen sind, wobei ein Fehlschlag einer solchen redundanten Komponente für den Fehlertoleranzmechanismus toleriert werden kann.

Das FTEntity Element 33 kann verwendet werden, zumindest eine und/oder alle Komponenten eines eingebetteten Systems, die zu dem eingebundenen Fehlertoleranzmechanismus gehören, aber keine redundanten Komponenten sind, zu bestimmen. Das FTEntity Element 33 umfasst zumindest ein FTEntity Attribut 33a. In einer Implementierung kann das FTEntity Element 33 die folgenden FTEntity Attribute 33a umfassen. Das FTEntity Element 33 kann ein property Attribut umfassen, um eine Eigenschaft einer Komponente des Fehlertoleranzmechanismus zuzuordnen. In einem Beispiel kann das property Attribut ein Laufzeitwert, z.B. eine WCET einer entsprechenden Komponente spezifizieren. Das FTEntity Element 33 kann weiterhin ein execution Attribut umfassen, um eine Ausführung eines FTEntity Elements 33, also einer Komponente des Fehlertoleranzmechanismus, relative zu einer redundanten Komponente zu spezifizieren. Eine Kombination der Durchläufe durch den Fehlertoleranzmechanismus, wie sie beispielsweise in dem execPattern Attribut des FTMechanism Elements 32 spezifiziert sein können, mit den nichtredundanten Komponenten relative zu ihren redundanten Komponenten bezüglich des execution Attributs, können die ausgeführten Komponenten eines bestimmten Modus des Fehlertoleranzmechanismus definieren. Solche ausgeführten Komponenten eines Modus des Fehlertoleranzmechanismus können dann verwendet werden, um eine Laufzeit zu berechnen, die ein bestimmter Modus des Fehlertoleranzmechanismus zur Ausführung (des entsprechenden Durchlaufs) benötigt. In dem execution Attribut des FTEntity Elements 33 können ein oder mehrere oder alle der folgenden Informationen spezifiziert sein. Eine Information kann dadurch definiert sein, dass sie spezifiziert, dass eine Komponente vor oder nach einer der redundanten Komponenten ausgeführt wird. Weiterhin kann eine Information dadurch definiert sein, dass sie spezifiziert, dass eine Komponente des Fehlertoleranzmechanismus nur genau einmal ausgeführt wird, und zwar jedes Mal, wenn der Fehlertoleranzmechanismus aufgerufen wird.

Das Meta-Modell kann weiterhin ein alternate Element 34 umfassen. Das alternate Element 34 definiert eine Spezialisierung des FTEntity Elements 33, um redundante Alternativen eines Fehlertoleranzmechanismus zu spezifizieren. Damit ist das alternate Element 34 auch dem FTMechanism Element 33 zugeordnet. Zusätzlich zu den Attributen 33a des FTEntity Elements 33 kann das alternate Element 34a noch zumindest ein weiteres alternate Attribut 34a umfassen. In einer Implementierung kann das alternate Element 34 ein oder mehrere der folgenden alternate Attribute 34a umfassen (keine in Figur 4 gezeigt), um zumindest einen Fehlermodus eines dem Fehlertoleranzmechanismus zugeordneten Sicherheitsanalysemodells 37 zu bestimmen. Beispielsweise umfasst das alternate Element 34 ein detectableFailureModes Attribut, um Fehlermodi 36 eines eingebundenen Sicherheitsanalysemodells 37, die von einem Fehlertoleranzmechanismus ermittelt werden können, zuzuordnen. Ferner kann das alternate Element 34 ein undetectableFailureModes Attribut umfassen, welches Fehlermodi 36 des eingebundenen Sicherheitsanalysemodells 37, die von einem Fehlertoleranzmechanismus nicht ermittelt werden können, zuzuordnen. Außerdem kann das alternate Element 34 ein propertyFailureModes Attribut umfassen, um Fehlermodi 36 zu bestimmen, welche eine Eigenschaft einer redundanten Komponente des Fehlertoleranzmechanismus beeinflussen. Solche Fehlermodi 36 können als zusätzlich Laufzeitfehler betrachtet werden, die nicht durch eine WCET-Analyse der Laufzeit eines Fehlertoleranzmechanismus abgedeckt werden können. Ein solcher Fehlermodus kann beispielsweise einen Hardware-Fehler umfassen (z.B. eine überhitzte CPU), welcher eine redundante Alternative eines Fehlertoleranzmechanismus verlangsamt, so dass eine Laufzeit eines Durchlaufs verschlechtert wird. Zusätzliche Laufzeitfehler können in einem propertyFailureModes Element 35, welches dem alternate Element 34 zugeordnet ist, spezifiziert und/oder verwaltet werden. Zusätzliche Laufzeitfehler in dem propertyFailureModes Element 35 können durch zumindest ein propertyFailureModes Attribut 35a weiter spezifiziert sein. In einer Implementierung umfasst das propertyFailureModes Element 35 ein property Attribut. Das property Attribut spezifiziert eine Zeit, die zusätzlich zu einem Laufzeitwert einer redundanten Komponente eines Fehlertoleranzmechanismus verbraucht wird, wenn die entsprechende redundante Komponente ausgeführt wird und dieser Fehlermodus, also ein zusätzlicher Laufzeitfehler, aktiviert ist.

Die von dem Meta-Modell 30 bereitgestellten Daten zur Annotation eines eingebetteten Systems mit einem Fehlermechanismus können verarbeitet werden, um zumindest eine wahrscheinliche Laufzeit für das System zu berechnen, beispielsweise für einen möglichen Durchlauf durch das System. Dazu wird das System in einer internen, annotierten und/oder ausgezeichneten Darstellung, die automatisch im Computer verarbeitet werden kann, verwendet.

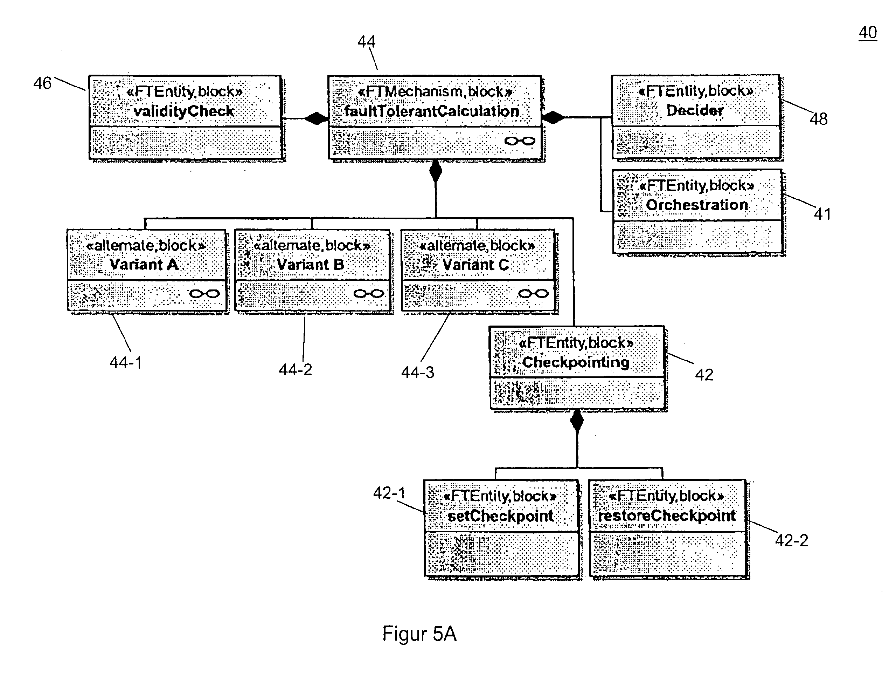

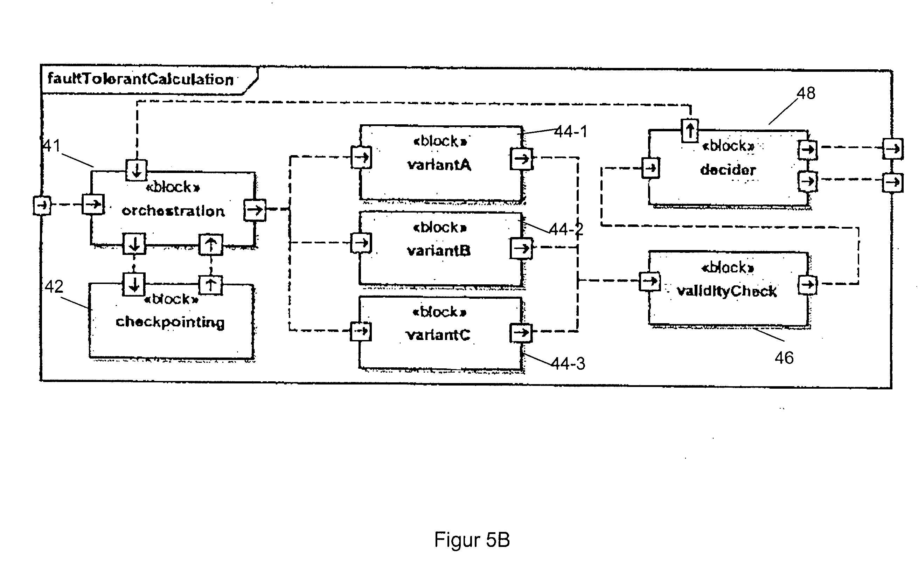

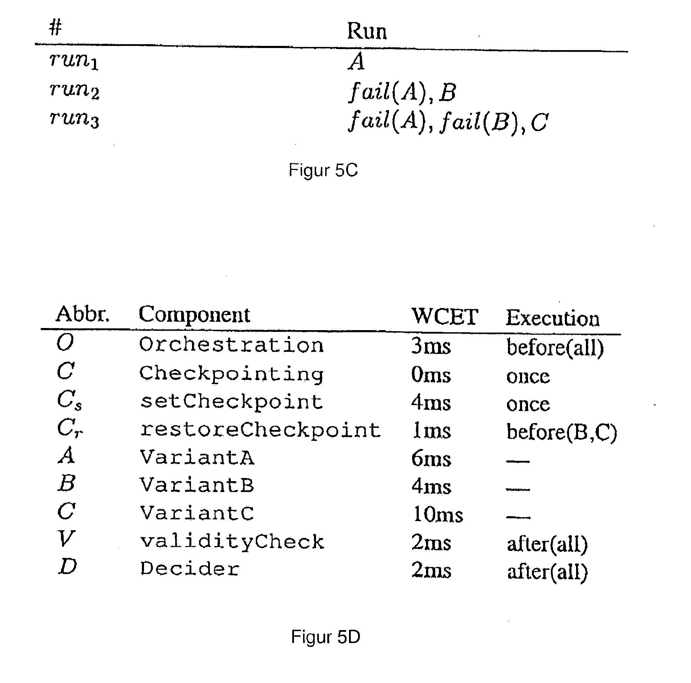

In einer beispielhaften Implementierung des hier beschriebenen Verfahrens unter Einbezug vorhandener Werkzeuge in einer Werkzeugkette, beispielsweise die Verwendung von in der Industrie etablierten Entwicklungs- und Analysewerkzeugen oder Methodiken, können eine Anpassung des zuvor beschriebenen Meta-Modells 30 notwendig machen. Elemente, wie etwa Attribute 32a, 33a, 34a, oder 35a können ergänzt werden und/oder auch (zumindest) teilweise entfallen. Dies ist beispielsweise der Fall für Element 32a, wenn eine explizierte Modellierung der Semantik des Fehlertoleranzmechanismus nicht benötigt wird. Ebenso können Elemente wie 31, 32, 34, 35 oder 37 entfallen oder weitere Elemente hinzugefügt werden. Das ist beispielsweise der Fall für Element 32, wenn eine explizierte Kapselung des Fehlertoleranzmechanismus nicht benötigt oder unterstützt wird. Die Elemente 33 und 36 bleiben dabei allerdings stets integraler Bestandteil des Meta-Modells 30, da sie die Kombination von Elementen eines Fehlertoleranzmechanismus mit Elementen eines Sicherheitsanalysemodells ermöglichen. Eine interne, also annotierte und/oder ausgezeichnete, Darstellung eines Systems mit Fehlertoleranzmechanismus ist beispielsweise in Figur 1 gezeigt. Ein weiteres Beispiel wird im Folgenden mit Bezug auf Figuren 5 bis 7 beschrieben.

Mit Bezug auf **Figuren 5A bis 7C** wird anhand eines Beispiels beschrieben, wie das in Figur 4 gezeigte Meta-Modell 30 auf ein sicherheitskritisches eingebettetes System mit Fehlertoleranzmechanismus angewendet werden kann, um daraus dann automatisch Laufzeiten für den Fehlertoleranzmechanismus, genauer für mögliche Durchläufe durch den Fehlertoleranzmechanismus, zu generieren. Den so automatisch berechneten und/oder generierten Laufzeiten können weiterhin Wahrscheinlichkeiten zugeordnet werden, so dass dann eine pessimistische Laufzeiteinschätzung für den Fehlertoleranzmechanismus vorgenommen werden kann und nicht nur einfach eine WCET für den Mechanismus bestimmt wird. Eine pessimistische Laufzeitberechnung erlaubt es dann, eine Aussage darüber zu treffen, ob ein Fehlertoleranzmechanismus in einem wahrscheinlichen pessimistischen Fall noch eine akzeptable und/oder tolerierbare Laufzeit für das zugrunde liegende eingebettete System hat. Eine somit als sehr unwahrscheinlich einzuschätzende Laufzeit für einen möglichen Durchlauf durch den Fehlertoleranzmechanismus wird somit nicht für eine pessimistische Laufzeitberechnung beachtet. Beispielsweise kann ein worst case nur in einem sehr unwahrscheinlichen Fall eintreten, so dass dieser dann nicht in der pessimistischen Laufzeiteinschätzung berücksichtigt werden braucht. Somit ist also eine viel genauere und detailliertere Analyse des Laufzeitverhaltens eines Fehlertoleranzmechanismus möglich. Außerdem ist eine Aussage über die pessimistische Laufzeit zur Einschätzung einer Einsetzung des Fehlertoleranzmechanismus in einem eingebetteten System viel hilfreicher und besser verwendbar.

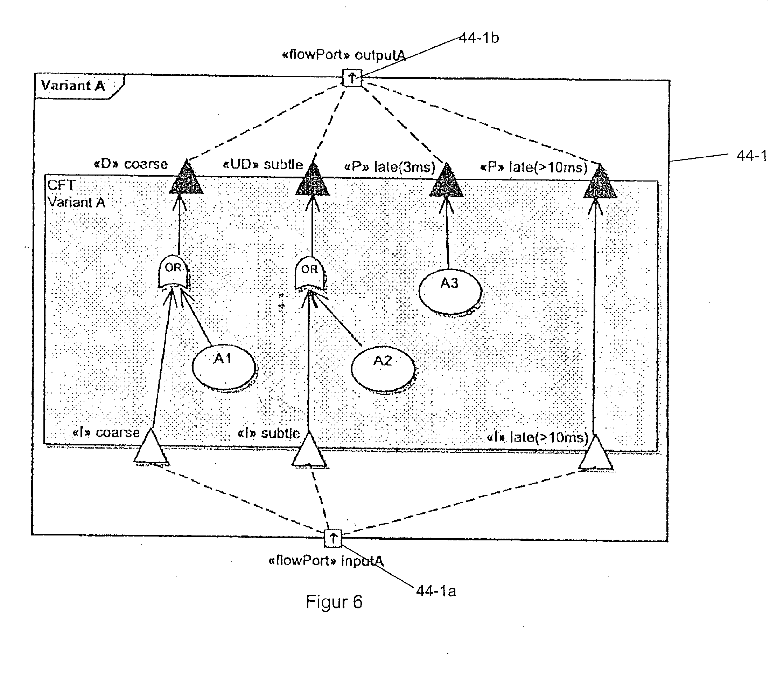

**Figuren 5A** **und** **5B** zeigen ein exemplarisches sicherheitskritisches eingebettetes System 40 mit einem darin verwendeten Fehlertoleranzmechanismus 44 **(****Figur 5A****)** und wie das Meta-Modell 30 auf das System angewendet werden kann, um eine interne, also annotierte und/oder ausgezeichnete Darstellung des Systems 40 **(****Figur 5B****)** zur automatischen Laufzeitanalyse zu erhalten. **Figur 5C** zeigt eine tabellarische Auflistung einer Annotation bzw. eines Auszeichnen von Komponenten 41, 42-1, 42-2, 42, 44-1, 44-2, 44-3, 44, 46, 48 des Systems 40 unter Verwendung des Meta-Modells 30. In einer beispielhaften Implementierung wird ein Meta-Modell 30 auf ein System und/oder einen Fehlertoleranzmechanismus 40 automatisch angewendet, um eine entsprechende interne Darstellung zu erhalten. In **Figur 5D** sind außerdem die möglichen Durchläufe durch das System 40 tabellarisch aufgelistet. **Figur 6** zeigt dann, wie das Meta-Modell 30 auf zumindest eine Komponente eines dem System 40 zugeordneten Sicherheitsanalysemodell angewendet werden kann.

Das sicherheitskritische eingebettete System 40, welches in Figur 5A gezeigt ist, umfasst eine Vielzahl von Komponenten 41, 42-1, 42-2, 42, 44-1, 44-2, 44-3, 44, 46, 48 zur Ausführung des Systems 40. Die entsprechenden Komponenten in der entsprechenden internen Darstellung des Systems 40 von Figur 5B haben zur Vereinfachung dieselben Bezugszeichen.

Das System in Figuren 5A und 5B wird dadurch aktiviert, dass eine Eingabe an der Orchestration (bzw. O) Komponente 41 empfangen wird. Damit beginnt ein Durchlauf durch das System 40. Die Orchestration Komponente 41 speichert einen Checkpoint unter Verwendung der Checkpointing (bzw. C) Komponente 42. Der gespeichert Checkpoint umfasst die ursprüngliche Eingabe und kann für weitere Ausführungen des Systems 40 kann im Falle eines Fehlers auf eine der redundanten Komponenten (bzw. A, B, C) 44-1, 44-2, 44-3 des Fehlertoleranzmechanismus 44 zugegriffen werden. Die Checkpointing Komponente 42 kann in zwei weitere (Unter- bzw. Teil-)Komponenten aufgeteilt sein, beispielsweise ein setCheckpoint (Cs) Komponente 42-1 und eine restoreCheckpoint (Cr) Komponente 42-2. Die Teilkomponenten der Checkpointing Komponente 42 sind in der internen Darstellung des Systems 40 in Figur 5B nicht gezeigt.

Nachdem der Checkpoint gesetzt wurde, also die ursprüngliche Eingabe gespeichert wurde, schickt die Orchestration Komponente 41 die Eingabe an eine erste (bzw. A) der redundanten Komponenten 44-1 des Fehlertoleranzmechanismus 44 des Systems 40 zur Berechnung. Die erste redundante Komponente 44-1 führt Berechnungen auf Basis der Eingabe durch und schickt das berechnete Ergebnis an die validityCheck (bzw. V) Komponente 46. Die validityCheck Komponente 46 überprüft das empfangende Ergebnis auf seine Korrektheit. Falls die validityCheck Komponente 46 einen Fehler in dem Ergebnis feststellt, werden eine Fehlermeldung und/oder ein entsprechender Fehler an die Decider (bzw. D) Komponente 48 berichtet. Andernfalls wird das Ergebnis der ersten redundanten Komponente 44-1 zur Ausgabe weitergeleitet.

Im Falle einer Fehlermeldung leitet die Decider Komponente 48 entweder ein zu berichtigendes Ergebnis an eine Ausgabe des Systems 40 und/oder berichtet der Orchestration Komponente 41, dass die erste redundante Komponente 44-1 gescheitert bzw. fehlgeschlagen ist. Auf Erhalt eines Berichts über eine fehlerhafte erste redundante Komponente 44-1 greift die Orchestration Komponente 41 auf den Checkpoint zu und lädt nochmals die Eingabe und schick diese an eine zweite (bzw. B) redundante Komponente 44-2 des Fehlertoleranzmechanismus 44 um eine entsprechende Berechnung auf Basis der Eingabe aus- bzw. durchzuführen. Der weitere Prozess der Überprüfung erfolgt (im Wesentlichen) analog zu dem zuvor mit Bezug auf die erst redundante Komponente 44-1 beschriebenen Prozess. Wenn auch die zweite redundante Komponente 44-2 ein fehlerhaftes Ergebnis liefert, kann der Prozess über eine dritte (bzw. C) redundante Komponente 44-3 wiederholt werden.

In diesem Beispiel sind drei redundante Komponenten 44-1, 44-2, 44-3 eines Fehlertoleranzmechanismus 44 gezeigt. Es könnte ebenso mehr oder weniger Komponenten geben. Entsprechend wird der beschriebene Prozess solange wiederholt, bis von einer redundanten Komponente 44-1, 44-2, 44-3 ein korrektes Ergebnis zu der Eingabe berechnet wurde. Berechnet keine der redundanten Komponenten 44-1, 44-2, 44-3 ein korrektes Ergebnis, so sendet die Decider Komponente 48 eine Fehlermeldung an eine Ausgabe des Systems.

Mit Bezug auf **Figuren 5B****,** **5C und 5D** wird gezeigt, wie das System 40 semantisch angereichert bzw. annotiert wird und zwar beispielsweise mittels des Meta-Modells 30 von Figur 4. In Figur 5B wird das annotierte System 40 gezeigt, wobei zur besseren Lesbarkeit die ausgezeichneten Werte der einzelnen Komponenten 41, 42-1, 42-2, 42, 44-1, 44-2, 44-3, 44, 46, 48 weggelassen wurden. Beispielhaft ist eine Annotierung der Komponenten 41, 42-1, 42-2, 42, 44-1, 44-2, 44-3, 44, 46, 48 des Systems 40 mit einigen der möglichen Werte, mit denen eine Komponente 41, 42-1, 42-2, 42, 44-1, 44-2, 44-3, 44, 46, 48 mit Hilfe des Meta-Modells 30 ausgezeichnet werden kann, wie in Figuren 5C und 5D gezeigt.

Wie in der Tabelle von Figur 5D beispielhaft gezeigt, kann jede der Komponenten 41, 42-1, 42-2, 42, 44-1, 44-2, 44-3, 44, 46, 48 des Systems mit einer Laufzeit (z.B. der WCET der entsprechenden Komponente) ausgezeichnet werden. Wie zuvor mit Bezug auf Figur 4 beschrieben, kann das property Attribut der FTEntity Komponente 33 verwendet werden, um eine Komponente 41, 42-1, 42-2, 42, 44-1, 44-2, 44-3, 44, 46, 48 eines Systems 40 mit einer entsprechenden Laufzeit auszuzeichnen. Wie außerdem in der Tabelle von Figur 5D beispielhaft gezeigt, kann jede der Komponenten 41, 42-1, 42-2, 42, 44-1, 44-2, 44-3, 44, 46, 48 des Systems mit einer Ausführungsreihenfolge relative zu den redundanten Komponenten 44-1, 44-2, 44-3 des Fehlertoleranzmechanismus 44 des Systems 40 ausgezeichnet werden. Wie zuvor mit Bezug auf Figur 4 beschrieben, kann das execution Attribut der FTEntity Komponente 33 verwendet werden, um eine Komponente 41, 42-1, 42-2, 42, 44-1, 44-2, 44-3, 44, 46, 48 eines Systems 40 mit einem solchen entsprechenden Wert hinsichtlich der Ausführungsreihenfolge auszuzeichnen. Gemäß der Tabelle in Figur 5D ist die Orchestration Komponente 41 des Systems 40 mit einer Laufzeit von 3ms und einer Ausführungsreihenfolge before(all) ausgezeichnet. Diese Ausführungsreihenfolge spezifiziert, dass die Orchestration Komponente 41 bei einem Durchlauf durch das System 40 vor jeder der redundanten Komponenten 44-1, 44-2, 44-3 ausgeführt wird. Die Checkpointing Komponente 42 hat eine Laufzeit von 0ms und wird genau einmal zu Beginn eines Durchlaufs ausgeführt. Die setCheckpoint Komponente 42-1 hat eine Laufzeit von 4ms und wird genau einmal zu Beginn eines Durchlaufs ausgeführt. Die restoreCheckpoint Komponente 42-2 hat eine Laufzeit von 1 ms und wird vor Ausführung der zweiten und dritten redundanten Komponente 44-2 und 44-3 in einem Durchlauf ausgeführt. Die redundanten Komponenten 44-1, 44-2 und 44-3 haben jeweils eine Laufzeit von 6ms, 4ms und 10ms und keine Ausführungsreihenfolge relative zu den redundanten Komponenten 44-1, 44-2, 44-3, der entsprechende Wert ist somit leer. Die validityCheck Komponente 46 hat eine Laufzeit von 2m und wird bei einem Durchlauf durch das System 40 nach jeder der redundanten Komponenten 44-1, 44-2, 44-3 ausgeführt. Die Decider Komponente 46 hat eine Laufzeit von 2m und wird bei einem Durchlauf durch das System 40 nach jeder der redundanten Komponenten 44-1, 44-2, 44-3 ausgeführt.

Wie in **Figur 5C** gezeigt, gibt es zumindest drei verschiedene erfolgreiche Durchläufe durch das System 40, also zumindest drei Möglichkeiten bei einem Durchlauf ein korrektes Ergebnis zu erzeugen. Die für das System 40 ermittelten erfolgreichen Durchläufe werden in der Tabelle von Figur 5C als run₁, run₂ und run₃ bezeichnet. Bei einem ersten erfolgreichen Durchlauf run₁ durch das System 40 wird ein korrektes und/oder zumindest ein akzeptierbares Ergebnis zu einer Eingabe von der ersten redundanten Komponente 44-1 des Fehlertoleranzmechanismus 44 berechnet. Bei einem zweiten erfolgreichen Durchlauf run₂ durch das System 40 wird ein korrektes und/oder zumindest ein akzeptierbares Ergebnis zu einer Eingabe von der zweiten redundanten Komponente 44-2 des Fehlertoleranzmechanismus 44 berechnet, wobei die erste redundante Komponente 44-1 zuvor ein fehlerhaftes Ergebnis erzeugt hatte. Bei einem dritten erfolgreichen Durchlauf run₃ durch das System 40 wird ein korrektes oder zumindest ein akzeptierbares Ergebnis zu einer Eingabe von der dritten redundanten Komponente 44-3 des Fehlertoleranzmechanismus 44 berechnet, wobei die erste und die zweite redundante Komponente 44-1 und 44-2 zuvor fehlerhafte Ergebnisse erzeugt hatten. Die Durchläufe des Systems 40 können mittels des execPattern Attributes des FTMechanism Elements 32 des Meta-Modells 30 in dem annotierten System 40 von Figur 5B ausgezeichnet werden.

Fehlermodi eines einem System 40 zugeordneten Sicherheitsanalysemodells, die eine Möglichkeit und/oder Wahrscheinlichkeit eines Fehlverhaltens der redundanten Komponenten 44-1, 44-2, 44-3 des Fehlertoleranzmechanismus 44 bestimmen können, können zudem den redundanten Komponenten 44-1, 44-2, 44-3 zugeordnet werden. Entsprechend werden die redundanten Komponenten 44-1, 44-2, 44-3 mit zumindest einem entsprechenden Fehlermodus ausgezeichnet und in der internen Darstellung des Systems 40 entsprechend annotiert. Dazu können in einer Implementierung die detectableFailureModes, undetectableFailureModes und propertyFailureModes Attribute der alternate Komponente des Meta-Modells 30 von Figur 4 verwendet werden. Um Fehlermodi redundanter Komponenten 44-1, 44-2, 44-3 automatisch zu bestimmen, kann ein Sicherheitsanalysemodell verwendet werden. In einem Beispiel kann ein verwendetes Sicherheitsanalysemodell eine komponenten-basierte Fehlerbaumanalyse (CFT) sein.

In **Figur 6** ist eine exemplarische Sicherheitsanalyse der ersten redundanten Komponente 44-1 des Fehlertoleranzmechanismus 44 gezeigt. In diesem Beispiel wird eine Sicherheitsanalyse eines Systems 40 mittels einer komponenten-basierte Fehlerbaumanalyse verwendet. Es sind aber auch andere Sicherheitsanalysemodelle für Fehlertoleranzmechanismen in im Wesentlichen gleicher Weise anwendbar. Beispielsweise umfasst ein Sicherheitsanalysemodell für eine erste redundante Komponente 44-1 des in Figur 5 gezeigten Systems 40 ein oder mehrere Fehlermodi an einer Ausgabe 44-1b und/oder ein oder mehrere Fehlermodi an einer Eingabe 44-1a der Komponente 44-1. Beispielsweise umfasst die erste redundante Komponente 44-1 ein oder mehrere oder alle der folgenden Ausgabe-Fehlermodi 44-1b: coarse, subtle, late(3ms), late(>10ms) und/oder ein oder mehrere oder alle der folgenden Eingabe-Fehlermodi: coarse, subtle, late(>10ms). Weiterhin kann die Sicherheitsanalyse der Komponente 44-1 zusätzlich und/oder alternative zu den Ein-/Ausgabe-Fehlermodi, interne Fehlermodi, z.B. A1, A2, A3 umfassen.

Die in Figur 6 gezeigte Sicherheitsanalyse der ersten redundanten Komponente 44-1 kann somit wie folgt gelesen werden. Die erste redundante Komponente 44-1 umfasst einen coarse-Fehler an ihrer Ausgabe 44-1b, wenn ein interner Fehlermodus A1 auftritt oder (OR-Tor), wenn die erste redundante Komponente an ihrer Eingabe 44-1a einen coarse-Fehler empfängt. Entsprechend umfasst die erste redundante Komponente 44-1 einen subtle-Fehler an ihrer Ausgebe 44-1b, wenn ein interner Fehlermodus A2 auftritt oder (OR-Tor) wenn die erste redundante Komponente 44 an ihrer Eingabe 44-1a einen subtle-Fehler empfängt. Weiterhin kann die erste redundante Komponente 44-1 einen late(3ms)-Fehler an ihrer Ausgabe 44-1b aufweisen, wenn ein interner Fehlermodus A3 auftritt. Außerdem kann die erste redundante Komponente 44-1 einen late(>10ms)-Fehler an ihrer Ausgabe aufweisen, wenn die erste redundante Komponente an ihrer Eingabe 44-1 a einen late(>10ms)-Fehler empfängt.

Eine coarse-Fehler kann beispielsweise von der validityCheck Komponente 46 des Systems 40 entdeckt werden und kann mittels des detectableFailureModes Attributes der alternate Komponente 34 des Meta-Modells 30 in der internen Darstellung des Systems 40 annotiert bzw. ausgezeichnet werden.

Ein subtle-Fehler kann beispielsweise als ein Fehler des Systems 40 klassifiziert sein, welcher nicht von der validityCheck Komponente 46 des Systems 40 entdeckt werden kann. Ein subtle-Fehler kann mittels des undetectableFailureModes Attributes der alternate Komponente 34 des Meta-Modells 30 in der internen Darstellung des Systems 40 annotiert bzw. ausgezeichnet werden.

Die möglichen late(3ms)- und late(>10ms)-Fehler der ersten redundanten Komponente 44-1 spezifizieren Fehlermodi einer redundanten Komponente 44-1 selbst, welche eine Ausführung der Komponente 44-1 weiter verzögern können. Solche Fehler können mittels des propertyFailureModes Attributes der alternate Komponente 34 des Meta-Modells 30 in der internen Darstellung des Systems 40 annotiert bzw. ausgezeichnet werden.

In einer exemplarischen Implementierung können die Sicherheitsanalysen mittels eines Sicherheitsanalysemodells für die zweite und dritte redundante Komponente 44-2 und 44-3 des Fehlertoleranzmechanismus 44 des Systems 40 im Wesentlichen dieselben Ausgabe-Fehlermodi umfassen und entsprechend in der internen Darstellung des Systems 40 ausgezeichnet sein, wie das in Figur 6 gezeigte Beispiel für die erste redundante Komponente 44-1.

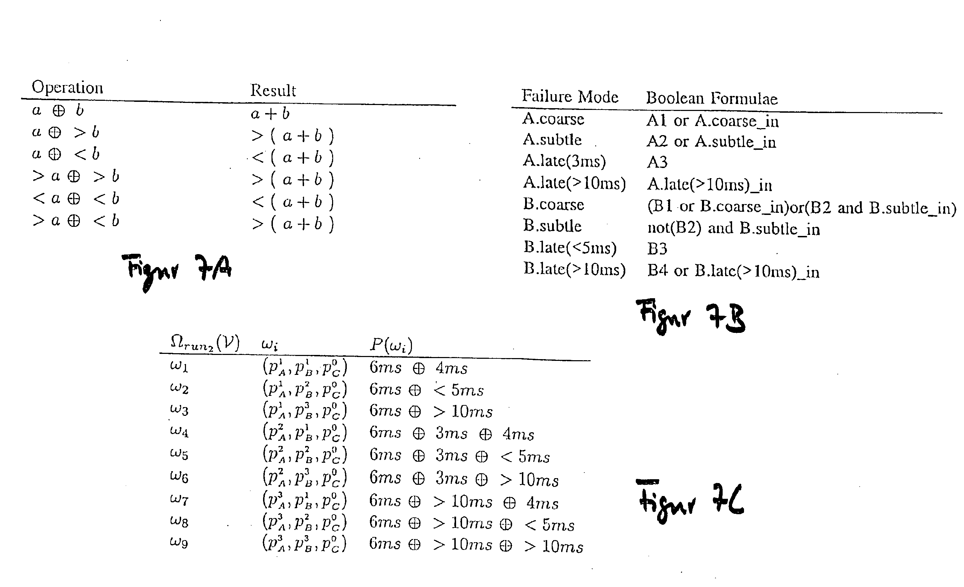

Nachdem eine wie zuvor erläuterte Annotation mittels eines Meta-Modells 30 und/oder eines Sicherheitsanalysemodells für ein sicherheitskritisches eingebettetes System 40 mit Fehlertoleranzmechanismus 44 automatisch erfolgt ist, kann das System 40 analysiert werden. Eine solche Analyse des Systems 40 in Hinblick auf Fehlerwahrscheinlichkeiten und damit eine pessimistische Abschätzung eines Laufzeitverhaltens des Systems 40 werden mit Bezug auf **Figuren 7A bis 7F** beschrieben.

Ein wie zuvor beschriebenes annotiertes eingebettetes System kann analysiert werden unter Verwendung von Laufzeiten (z.B. WCETs), welche jeweiligen redundanten Komponenten eines Fehlertoleranzmechanismus zugeordnet sind und/oder anderen Komponenten eines Systems, und/oder unter Verwendung einer Sicherheitsanalyse des Systems 40, um Wahrscheinlichkeiten für ein Auftreten von Fehlern während zumindest eines Durchlaufs durch das Systems 40 zu bestimmen. Solche Wahrscheinlichkeiten, das ein Fehler in einem System auftritt, können dann dazu verwendet werden, zu bestimmen, wie wahrscheinlich eine bestimmte Laufzeit für das System überhaupt ist. Damit kann dann eine detaillierte Abschätzung der Laufzeit eines Fehlertoleranzmechanismus für das System gemacht werden, die weit darüber hinausgeht, was eine simple WCET des Systems erlaubt. Dazu können Laufzeiten einzelner Komponenten eines Systems mit ein oder mehreren Fehlermodi und/oder Wahrscheinlichkeiten für das Auftreten von solchen Fehlermodi eines verwendeten Sicherheitsanalysemodells verknüpft werden.

Eine Analyse einer Laufzeit mit Wahrscheinlichkeiten für verschiedene Durchläufe ist im Folgenden beispielhaft anhand des Systems 40 mit den zuvor erläuterten Annotationen beschrieben.

Ein Operator ⊕ zur Verknüpfung bzw. Verkettung von Laufzeitwerten von ausgeführten Operationen einzelner Komponenten 41, 42, 42a, 42b, 44, 44a, 44b, 44c, 46, 48 während eines Durchlaufs durch ein System 40 ist tabellarisch in **Figur 7A** gezeigt. Eine solche Verknüpfung kann als pessimistisch bezeichnet werden, da die Verknüpfung eine untere Schranke für eine Verknüpfung von zumindest zwei Laufzeiten spezifizieren kann. Eine pessimistische Verknüpfung von Laufzeiten oder Laufzeitwerten bedeutet dabei, dass eine negative Abschätzung nach unten, also zur schlecht möglichsten Annahme, gemacht wird. Der in Figur 7A gezeigt Operator ⊕ ist wie folgt zu verstehen. Werden beispielsweise zwei Laufzeitwerte a und b mit dem ⊕ Operator verknüpft, so können die beiden entsprechenden Werte addiert werden. Weiterhin werden beispielsweise ein Laufzeitwert a und ein Laufzeitwert kleiner als b (<b) mit dem ⊕ Operator verknüpft, so dass das Ergebnis der pessimistischen Laufzeitabschätzung für diese beiden Werte kleiner als ihre Summe (<a+b) ist. Entsprechend sind auch die weiteren Definitionen der Tabelle aus Figur 7A zu interpretieren und/oder zu lesen.

Mit Bezug auf **Figur 7B** wird eine exemplarische Analyse des zweiten Durchlaufs run₂ durch das System 40, welcher in Figur 5C gezeigt ist, also bei dem die erste redundante Komponente 44-1 ein fehlerhaftes Ergebnis liefert und danach die zweite redundante Komponente 44-2 ein korrektes (oder ein zumindest akzeptables) Ergebnis, erläutert. Die dazu verwendeten Fehlermodi der ersten und zweiten redundanten Komponenten 44-1 und 44-2, welche mit einem Sicherheitsanalysemodell (z.B. Figur 6) bestimmt worden sind, sind in Figur 7B gezeigt. Die Fehlermodi der ersten redundanten Komponente (bzw. A) 44-1 entsprechen denen in Figur 6 gezeigten Fehlermodi. Die Booleschen Formeln lassen sich aus den gezeigten möglichen Kombinationen ableiten und können, wie mit Bezug auf Figur 6 erläutert, bestimmt werden. Die Booleschen Formeln können im Wesentlichen als eine äquivalente formale Beschreibung der graphisch dargestellten möglichen Verknüpfungen von Eingabe- zu Ausgabe-Fehlermodi, u. U. mit Einbeziehung zumindest einen internen Fehlermodus einer Komponente in einem Sicherheitsanalysemodell bezeichnet werden und entsprechend interpretiert werden.

Wie in Figur 7B weiterhin gezeigt, umfasst die zweite redundante Komponente (bzw. B) 44-2 beispielsweise ein oder mehrere oder alle der folgenden Ausgabe-Fehlermodi: coarse, subtle, late(<5ms), late(>10ms). Eine entsprechende Sicherheitsanalyse der zweiten redundanten Komponente 44-1 kann wie folgt mittels Boolescher Formeln spezifiziert werden. Die zweite redundante Komponente 44-2 umfasst einen coarse-Fehler an ihrer Ausgabe wenn ein interner Fehlermodus B1 auftritt oder die zweite redundante Komponente 44-2 an ihrer Eingabe einen coarse-Fehler empfängt oder wenn ein interner Fehlermodus B2 auftritt oder die zweite redundante Komponente 44-2 an ihrer Eingabe einen subtle-Fehler empfängt. Entsprechend umfasst die zweite redundante Komponente 44-2 einen subtle-Fehler an ihrer Ausgabe, wenn ein interner Fehlermodus B2 nicht auftritt oder wenn die zweite redundante Komponente 44-2 an ihrer Eingabe einen subtle-Fehler empfängt. Weiterhin kann die zweite redundante Komponente 44-2 einen late(<5ms)-Fehler an ihrer Ausgabe aufweisen, wenn ein interner Fehlermodus B3 auftritt. Außerdem kann die zweite redundante Komponente 44-2 einen late(>10ms)-Fehler an ihrer Ausgabe aufweisen, wenn ein interner Fehlermodus B4 auftritt oder wenn die zweite redundante Komponente 44-2 an ihrer Eingabe einen late(>10ms)-Fehler empfängt.

Wie in **Figur 7C** gezeigt, umfasst in diesem Beispiel jede der entsprechenden Komponente 41, 42, 42-1, 42-2, 44, 44-1, 44-2, 44-3, 46, 48 des Systems 40 bei dem zweiten Durchlauf run₂ eine Menge von zumindest drei Laufzeiten (für jede der redundanten Komponenten (bzw. A, B, C) 44-1, 44-2, 44-3) und/oder entsprechend zugeordnete Wahrscheinlichkeiten, welche mittels des property Attributes der FTEntity Komponente 33 des verwendeten Meta-Modells 30 spezifiziert und in dem System 40 entsprechend annotiert werden können.

In Figur 7C bezeichnet ν eine Menge von redundanten Komponenten eines Fehlertoleranzmechanismus in einem eingebetteten System und Ω*_{run₂}*(ν) einen Raum, welcher alle möglichen Kombinationen von Laufzeiten (z.B. WCETs) und entsprechenden zugeordneten Wahrscheinlichkeiten der redundanten Komponenten für den Durchlauf run₂ durch das entsprechende System umfasst. ωᵢ bezeichnet dabei einen Messpunkt ωᵢ des Durchlaufs run₂ und damit eine der möglichen Kombinationen des Durchlaufs run₂. In dem in Figur 7C gezeigten Beispiel gibt es neun verschiedene solcher Kombinationen. *P(*ωᵢ) bezeichnet dann eine Verknüpfung der Laufzeiten für den entsprechenden Messpunkt ωᵢ, also für eine mögliche Kombination des Durchlaufs run₂. Eine Verknüpfung der Laufzeitwerte der redundanten Komponenten kann mittels des in Figur 7A gezeigten Operators ⊕ erfolgen. Für die einzelnen möglichen Kombinationen in Figur 7C gilt, dass sich ein Laufzeitwert aus den entsprechenden Booleschen Formeln für die einzelnen Fehlermodi der redundanten Komponenten 44-1 und 44-2 berechnen lässt, wobei, weil der zweite Durchlauf run₂ durch das System betrachtet wird, immer zumindest der Laufzeitwert für die erste redundante Komponente 44-1 und der Laufzeitwert für die zweite redundante Komponente 44-2 anfällt. Die Laufzeitwerte der ersten und zweiten Komponenten 44-1 und 44-2 sind in Figur 5D gezeigt. Der erste Messpunkt entspricht einem möglichen zweiten Durchlauf run₂ durch das System 40, bei dem die Laufzeitwerte der ersten und zweiten redundanten Komponente 44-1 und 44-2 selbst verknüpft werden, wobei keine weiteren möglichen Fehlermodi auftreten, also 6ms der ersten redundanten Komponente 44-1 und 4ms der zweiten redundanten Komponente 44-2.

Bei Betrachtung des beispielhaft gezeigten Systems 40 wird der zweite Durchlauf run₂ durch das System 40 (im Wesentlichen) in der folgenden Reihenfolge ausgeführt: Orchestration (bzw. O) Komponente 41, setCheckpoint (bzw. Cs) Komponente 42-1, erste redundante (bzw. A) Komponente 44-1, validityCheck (bzw. V) Komponente 46, Decider (bzw. D) Komponente 48, Orchestration (bzw. O) Komponente 41, restoreCheckpoint (bzw. Cr) Komponente 42-2, zweite redundante (bzw. B) Komponente 44-2, validityCheck (bzw. V) Komponente 46, Decider (bzw. D) Komponente 48. Demzufolge kommen zu den möglichen Laufzeitwerten der möglichen Messpunkte ωᵢ hinsichtlich einer Kombination aller möglichen Fehlermodi des zweiten Durchlaufs run₂, wie in Figur 7C gezeigt, noch der folgende Laufzeitwert zu jedem der Messpunkte ωᵢ hinzu (vgl. die in Figur 5D angegebenen Laufzeitwerte für die jeweilig Komponente 41, 42, 42-1, 42-2, 44, 44-1, 44-2, 44-3, 46, 48, wobei die Laufzeitwerte für die erste und zweite redundante Komponente 44-1 und 44-2 nicht noch einmal addiert werden:
3ms ⊕ 4ms ⊕ 2ms ⊕ 2ms ⊕ 3ms ⊕ 1 ms ⊕ 2ms ⊕ 2ms = 19ms.

Eine Fehlerlogik, welche in einer für ein Fehlertoleranzmechanismus eines Systems verwendeten Sicherheitsanalysemodell spezifiziert sein kann, kann, nachdem alle möglichen Laufzeitwerte unter Berücksichtigung aller möglichen Fehlermodi der redundanten Komponenten in einem Durchlauf durch das System mit dem Fehlertoleranzmechanismus automatisch berechnet worden ist, verwendet werden, um automatisch Wahrscheinlichkeiten für die möglichen Laufzeitwerte eines Durchlaufs zu bestimmen. Zum automatischen Berechnen der Wahrscheinlichkeiten für die möglichen Laufzeitwerte von Figur 7C kann eine Fehlerlogik der möglichen Fehlermodi, welche in Figur 7B gezeigt sind, verwendet werden.

In einen Beispiel für eine Wahrscheinlichkeitsberechnung von möglichen Laufzeiten kann das analysierte System (z.B. System 40 aus Figur 5) ein Teilsystem eines größeren Systems sein, so dass Eingabe-Fehlermodi als gegeben vorausgesetzt werden können.

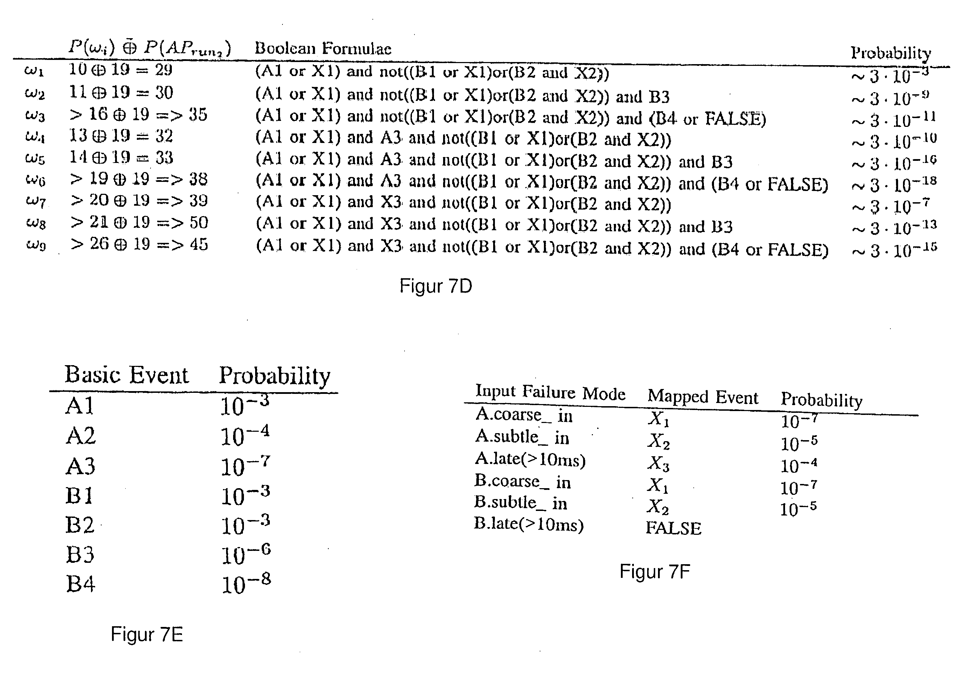

Um beispielhaft eine Ausdruckskraft des Verfahrens zur Bestimmung von Wahrscheinlichkeiten für mögliche Laufzeiten eines Fehlertoleranzmechanismus in einem eingebetteten System zu beschreiben, werden Wahrscheinlichkeiten für Eingabe-Fehlermodi von Komponenten eines Fehlertoleranzmechanismus in **Figur 7F** und Wahrscheinlichkeiten für interne Fehlermodi (z.B. A1, A2, A3 der ersten redundanten (bzw. A) Komponente 44-1 und B1, B2, B3 der zweiten redundanten (bzw. B) Komponente des vorangegangenen Beispiels) zumindest einer Komponente des Fehlertoleranzmechanismus in **Figur 7E** gezeigt. In einer Implementierung kann für die Eingabe-Fehlermodi angenommen werden, dass eine fehlerhafte Eingabe und/oder ein fehlerhafter Eingabewert als eine korrekte bzw. richtige Eingabe behandelt werden und an einer rückspeicherbaren Stelle (z.B. restoreCheckpoint Komponente 42-2 des Systems 40) gespeichert werden und welche die redundanten Komponenten entsprechend als Eingabe empfangen. In dieser Implementierung werden die coarse und subtle Eingabe-Fehlermodi der beispielhaft gezeigten ersten und zweiten redundanten (bzw. A und B) Komponenten 44-1 und 44-2 auf den gleichen Fehlermodus abgebildet. Diese Eingabe-Fehlermodi werden, wie in Figur 7F gezeigt, durch Ereignisse X₁ und X₂ spezifiziert. Der Eingabe-Fehlermodus, late(>10ms), welcher eine Komponente zwingt, ihre Berechnungen später als 10ms verzögert zu starten, wird für die erste redundante Komponente 44-1 durch das Ereignis X₃ spezifiziert. Für die zweite redundante Komponente 44-2 ist dieser Eingabe-Fehlermodus durch ein negatives Flag (false) spezifiziert, um zu verhindern, das in der Zeitanalyse dieser Wert doppelt berechnet wird.

Unter Verwendung der Informationen aus Figuren 7A, 7B. 7C, 7E und/oder 7F, können Messpunkte ωᵢ mit zugeordneten Wahrscheinlichkeiten für alle möglichen Laufzeiten des zweiten Durchlaufs run₂ durch das System 40 automatisch berechnet werden. Ein Resultat einer solchen Berechnung ist in **Figur 7D** gezeigt. Die in Figur 7D gezeigte Tabelle ist entsprechend wie folgt zu lesen: Für einen ersten möglichen Messpunkt ω₁ des zweiten Durchlaufs run₂ durch das System 40 ergibt sich ein Laufzeitwert von 29ms, d.h. 19ms der stets ausgeführten Komponenten des Systems 40 in dem zweiten Durchlauf run₂ addiert zu den Laufzeiten der ersten und zweiten Komponente 44-1 und 44-2 selbst (also 6ms plus 4ms). Eine entsprechende Boolesche Formel zur Berechnung der Wahrscheinlichkeit, dass dieser Messpunkt ω₁ bei einem zweiten Durchlauf run₂ durch das System tatsächlich auftritt, ergibt sich durch Kombination der entsprechenden Booleschen Formeln, welche der Tabelle in Figur 7C zu entnehmen sind und den zugeordneten Wahrscheinlichkeiten für die Eingabe-Fehlermodi und die internen Fehlermodi der ersten und zweiten redundanten Komponente 44-1 und 44-2, wie sie den Tabellen aus Figuren 7E und 7F zu entnehmen sind, d.h. für den Messpunkt ω₁ ergibt sich unter Verwendung von Figur 7C (A1 or A.coarse_in) and not (B1 or B.coarse_in)or(B2 and B.subtle_in) und daraus unter Anwendung der entsprechenden Ereignisse mit zugeordneten Wahrscheinlichkeiten aus Figuren 7E und 7F: (A1 or X1) and not ((B1or X1)or(B2 and X2)) und damit eine zugeordnete Wahrscheinlichkeit von ungefähr 3 10⁻³.

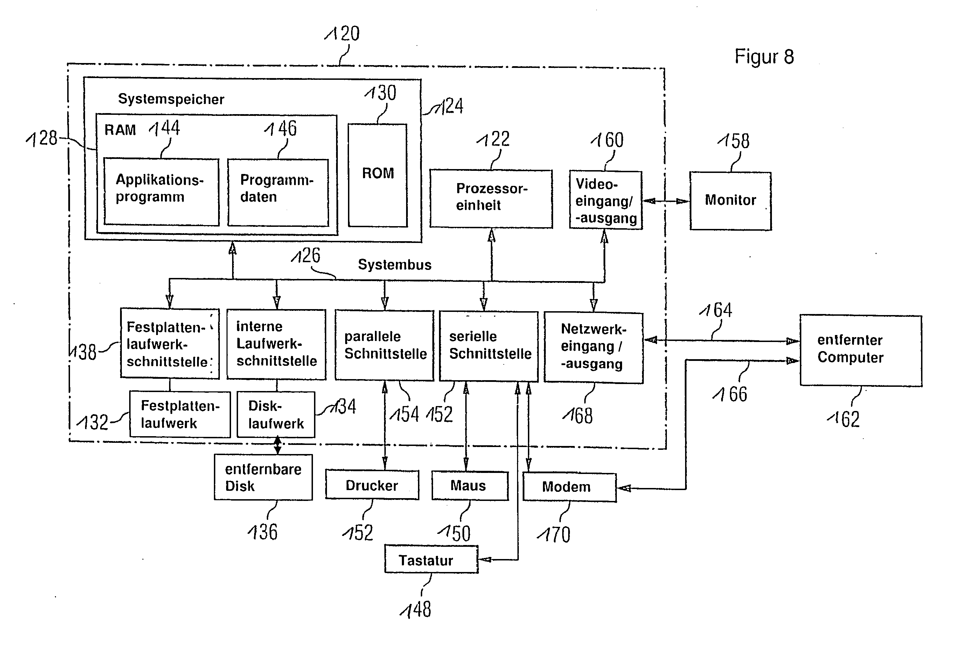

Mit Bezug auf **Figur. 8** wird ein beispielhaftes System zum Implementieren der Erfindung beschrieben. Ein beispielhaftes System umfasst eine universelle Rechnereinrichtung in der Form einer herkömmlichen Rechnerumgebung 120 z.B. ein "personal computer" (PC) 120, mit einer Prozessoreinheit 122, einem Systemspeicher 124 und einem Systembus 126, welcher eine Vielzahl von Systemkomponenten, unter anderem den Systemspeicher 124 und die Prozessoreinheit 122, verbindet. Die Prozessoreinheit 122 kann arithmetische, logische und/oder Kontrolloperationen durchführen, indem auf den Systemspeicher 124 zugegriffen wird. Der Systemspeicher 124 kann Informationen und/oder Instruktionen zur Verwendung in Kombination mit der Prozessoreinheit 122 speichern. Der Systemspeicher 124 kann flüchtige und nichtflüchtige Speicher, beispielsweise "random access memory" (RAM) 128 und "Nur-Lesespeicher" (ROM) 130 beinhalten. Ein Grund-Eingabe-Ausgabe-System (BIOS), das die grundlegenden Routinen enthält, welche helfen, Informationen zwischen den Elementen innerhalb des PCs 120, beispielsweise während des Hochfahrens, zu transferieren, kann in dem ROM 130 gespeichert sein. Der Systembus 126 kann eine von vielen Busstrukturen sein, unter anderem ein Speicherbus oder ein Speichercontroller, ein peripherer Bus und ein lokaler Bus, welcher eine bestimmte Busarchitektur aus einer Vielzahl von Busarchitekturen verwendet.

Der PC 120 kann weiterhin ein Festplattenlaufwerk 132 zum Lesen oder Schreiben einer Festplatte (nicht gezeigt) aufweisen und ein externes Disklaufwerk 134 zum Lesen oder Schreiben einer entfernbaren Disk 136 bzw. eines entfernbaren Datenträgers. Die entfernbare Disk kann eine magnetische Disk bzw. eine magnetische Diskette für ein magnetisches Disklaufwerk bzw. Diskettenlaufwerk oder eine optische Diskette wie z.B. eine CD-ROM für ein optisches Disklaufwerk sein. Das Festplattenlaufwerk 132 und das externe Disklaufwerk 134 sind jeweils mit dem Systembus 126 über eine Festplattenlaufwerkschnittstelle 138 und eine externe Disklaufwerkschnittstelle 140 verbunden. Die Laufwerke und die zugeordneten computerlesbaren Medien stellen einen nichtflüchtigen Speicher computerlesbarer Instruktionen, Datenstrukturen, Programm-Modulen und anderer Daten für den PC 120 zur Verfügung. Die Datenstrukturen können die relevanten Daten zum Implementieren eines wie oben beschriebenen Verfahrens aufweisen. Obwohl die beispielhaft beschriebene Umgebung eine Festplatte (nicht gezeigt) und eine externe Disk 142 verwendet, ist für den Fachmann offensichtlich, dass andere Typen computerlesbarer Medien, welche computerzugreifbare Daten speichern können, in der beispielhaften Arbeitsumgebung verwendet werden können, wie z.B. magnetische Kassetten, Flash-Memory Karten, digitale Videodisketten, Random-Access-Speicher, Nur-Lesespeicher, usw.

Eine Vielzahl von Programm-Modulen, insbesondere ein Betriebssystem (nicht gezeigt), ein oder mehrere Applikationsprogramme 144 oder Programm-Module (nicht gezeigt) und Programmdaten 146 können auf der Festplatte, der externen Disk 142, dem ROM 130 oder dem RAM 128 gespeichert werden. Die Applikationsprogramme können zumindest einen Teil der Funktionalität, wie in Figuren 1A bis 7F gezeigt, umfassen.

Ein Benutzer kann Kommandos und Information, wie oben beschrieben, in den PC 120 anhand von Eingabevorrichtungen, wie z.B. einer Tastatur bzw. eines Keyboards 148 und einer Computermaus bzw. einem Trackball 150 eingeben. Andere Eingabevorrichtungen (nicht gezeigt) können ein Mikrofon und/andere Sensoren, einen Joystick, ein Spielpolster bzw. -kissen, einen Scanner oder ähnliches umfassen. Diese oder andere Eingabevorrichtungen können mit der Prozessoreinheit 122 anhand einer seriellen Schnittstelle 152 verbunden sein, welche mit dem System 126 gekoppelt ist, oder können anhand anderer Schnittstellen, wie z.B. einer parallelen Schnittstelle 154, eines Spieleports oder eines universellen seriellen Busses (USB) verbunden sein. Weiterhin kann Information mit einem Drucker 156 gedruckt werden. Der Drucker 156 und andere parallele Eingabe/Ausgabevorrichtungen können mit der Prozessoreinheit 122 durch die parallele Schnittstelle 154 verbunden sein. Ein Monitor 158 oder andere Arten von Anzeigevorrichtung(en) ist/sind mit dem Systembus 126 mittels einer Schnittstelle, wie z.B. eines Videoeingang/-ausgangs 160 verbunden. Zusätzlich zu dem Monitor kann die Rechnerumgebung 120 andere periphere Ausgabevorrichtungen (nicht gezeigt) wie z.B. Lautsprecher oder akustische Ausgänge umfassen.

Die Rechnerumgebung 120 kann mit anderen elektronischen Vorrichtungen z.B. einem Computer, einem Schnurtelefon, einem schnurlosen Telefon, einem persönlichen digitalen Assistenten (PDA), einem Fernseher oder ähnlichem kommunizieren. Um zu kommunizieren, kann die Rechnerumgebung 120 in einer vernetzten Umgebung arbeiten, wobei Verbindungen zu einem oder mehreren elektronischen Vorrichtungen verwendet werden. Figur 3 stellt die mit einem "remote computer" bzw. entfernten Computer 162 vernetzte Rechnerumgebung dar. Der entfernte Computer 162 kann eine andere Rechnerumgebung, wie z.B. ein Server, ein Router, ein Netzwerk-PC, eine gleichwertige bzw. "peer" Vorrichtung oder andere gewöhnliche Netzwerkknoten sein und kann viele oder alle der hinsichtlich der Rechnerumgebung 120 oben beschriebenen Elemente umfassen. Die logischen Verbindungen, wie sie in Figur 3 dargestellt sind, umfassen ein "local area network" (LAN) 164 und ein "wide are network" (WAN) 166. Solche Netzwerkumgebungen sind alltäglich in Büros, firmenweiten Computernetzwerken, Intranet-Netzen und dem Internet.

Wenn eine Rechnerumgebung 120 in einer LAN-Netzwerkumgebung verwendet wird, kann die Rechnerumgebung 120 mit dem LAN 164 durch einen Netzwerkeingang/-ausgang 168 verbunden sein. Wenn die Rechnerumgebung 120 in einer WAN-Netzwerkumgebung verwendet wird, kann die Rechnerumgebung 120 ein Modem 170 oder andere Mittel zum Herstellen einer Kommunikation über das WAN 166 umfassen. Das Modem 170, welches intern und extern bezüglich der Rechnerumgebung 120 sein kann, ist mit dem Systembus 126 mittels der seriellen Schnittstelle 152 verbunden. In der Netzwerkumgebung können Programm-Module, welche relativ zu der Rechnerumgebung 120 dargestellt sind, oder Abschnitte davon in einer entfernten Speichereinrichtung gespeichert sein, welche an oder von einem entfernten Computer 162 zugreifbar bzw. systemeigen sind. Weiterhin können andere Daten, welche für das oben beschriebene Verfahren bzw. System relevant sind, auf oder von dem entfernten Computer 162 zugreifbar vorliegen.

### Bezugszeichenliste

10 System (sicherheitskritisches eingebettetes System mit Fehlertoleranzmechanismus)
12, 14, 16, 18 Komponente
11, 13 Durchlauf
12a, 14a, 16a, 18a Eingabe bzw. Eingabestelle
12b, 14b, 16b, 18b Ausgabe bzw. Ausgabestelle
20 Sicherheitsanalysemodell des Systems 10
20, 22, 24, 26, 28 Sicherheitsanalyse-Komponenten
20a, 22a, 24a, 26a, 28a Eingabe-Fehlermodus
20b, 22b, 24b, 26b, 28b Ausgabe-Fehlermodus
p1, p2, a1, a2 interner Fehlermodus
30 Meta-Modell
31, 32, 33, 34, 35, 36, 37 Element
32a, 33a, 34a, 35a Attribut
40 sicherheitskritisches eingebettetes System mit Fehlertoleranzmechanismus
41, 42, 42-1, 42-2, 44, 44-1, 44-2, 44-3, 46, 48 Komponente
44-1, 44-2, 44-3 redundante Komponente
44-1 a, 44-1b, A1, A2, A3 Fehlermodus
44-1a Eingabe-Fehlermodus
44-1b Ausgabe-Fehlermodus
A1, A2, A3 interner Fehlermodus
120 Rechnerumgebung
122 Prozessoreinheit
124 Systemspeicher
126 Systembus
128 random access memory (RAM)
130 Nur-Lesespeicher (ROM)
132 Festplattenlaufwerk
134 Disklaufwerk
136 entfernbare Disk
138 Festplattenlaufwerkschnittstelle
140 Disklaufwerkschnittstelle
142 externe Disk
144 Applikationsprogramm
146 Programmdaten
148 Tastatur
150 Computermaus/Trackball
152 serielle Schnittstelle
154 parallele Schnittstelle
156 Drucker
158 Monitor
160 Videoeingang/ -ausgang
162 entfernter Computer
164 "local area network" (LAN)
166 "wide area network" (WAN)
168 Netzwerkeingang/ -ausgang

## Patentansprüche

1. Computerimplementiertes Verfahren zum Bestimmen eines pessimistischen Zeitverhaltens eines Fehlertoleranzmechanismus, das Verfahren umfassend:
Bestimmen von Laufzeiten von ein oder mehreren Komponenten (12, 14, 16, 18; 41, 42, 42-1, 42-2, 44, 44-1, 44-2, 44-3-, 46, 48) eines Systems (10; 40) mit Fehlertoleranzmechanismus (14, 16; 44) in zumindest einem Durchlauf (11, 13; run₁, run₂, run₃) durch das System (10;40);
Bestimmen zumindest eines Fehlermodus (20a, 20b, 22a, 22b, 24a, 24b, 26a, 26b, 28a, 28b; 44-1 a, 44-1b, A1, A2, A3, B1, B2, B3) für zumindest eine der Komponenten (12, 14, 16, 18; 41, 42, 42-1, 42-2, 44, 44-1, 44-2, 44-3-, 46, 48) des Systems (10; 40);
Generieren zumindest eines Messpunkts (ωᵢ) für den Durchlauf (11, 13; run₁, run₂, run₃) durch Kombination der Laufzeiten der Komponenten (12, 14, 16, 18; 41, 42, 42-1, 42-2, 44, 44-1, 44-2, 44-3-, 46, 48) mit dem zumindest einen Fehlermodus (20a, 20b, 22a, 22b, 24a, 24b, 26a, 26b, 28a, 28b; 44-1 a, 44-1b, A1, A2, A3, B1, B2, B3).

2. Verfahren nach Anspruch 1, wobei der Fehlertoleranzmechanismus (14, 16; 44) zumindest eine redundante Komponente (14, 16; 44-1, 44-2, 44-3) umfasst und das Verfahren weiterhin umfassend:
Bestimmen des zumindest eine Fehlermodus (20a, 20b, 22a, 22b, 24a, 24b, 26a, 26b, 28a, 28b; 44-1 a, 44-1b, A1, A2, A3, B1, B2, B3) für die zumindest eine redundante Komponente (14, 16, 44-1, 44-2, 44-3).

3. Verfahren nach Anspruch 1 oder 2 weiterhin umfassend,
Berechnen einer Wahrscheinlichkeit für ein Eintreten des Fehlermodus (20a, 20b, 22a, 22b, 24a, 24b, 26a, 26b, 28a, 28b; 44-1 a, 44-1b, A1, A2, A3, B1, B2, B3).

4. Verfahren nach Anspruch 3 weiterhin umfassend:
Berechnen einer Wahrscheinlichkeit für ein Eintreten des zumindest einen Messpunkts (ωᵢ) des Durchlaufs (11, 13; run₁, run₂, run₃) basierend auf der Wahrscheinlichkeit des Fehlermodus (20a, 20b, 22a, 22b, 24a, 24b, 26a, 26b, 28a, 28b; 44-1 a, 44-1b, A1, A2, A3, B1, B2, B3).

5. Verfahren nach Anspruch 4 weiterhin umfassend:
Bestimmen einer pessimistischen Laufzeit für den zumindest einen Durchlauf (11, 13; run₁, run₂, run₃) basierend auf der Wahrscheinlichkeit des Messpunkts (ωᵢ) und den entsprechenden Laufzeiten der Komponenten (12, 14, 16, 18; 41, 42, 42-1, 42-2, 44, 44-1, 44-2, 44-3-, 46, 48).

6. Verfahren nach einem oder mehreren der vorangegangenen Ansprüche weiterhin umfassend:
Bestimmen des Fehlermodus (20a, 20b, 22a, 22b, 24a, 24b, 26a, 26b, 28a, 28b; 44-1a, 44-1b, A1, A2, A3, B1, B2, B3) für die Komponente (12, 14, 16, 18; 41, 42, 42-1, 42-2, 44, 44-1, 44-2, 44-3-, 46, 48) mittels eines Sicherheitsanalysemodells.

7. Verfahren nach Anspruch einem oder mehreren der vorangegangenen Ansprüche, wobei der Fehlermodus (20a, 20b, 22a, 22b, 24a, 24b, 26a, 26b, 28a, 28b; 44-1a, 44-1b, A1, A2, A3, B1, B2, B3) einen Ausgabe-Fehlermodus (20b, 22b, 24b, 26b, 28b; 44-1b) umfasst und der Ausgabe-Fehlermodus (20b, 22b, 24b, 26b, 28b; 44-1b) durch einen Eingabe-Fehlermodus (20a, 22a, 24a, 26a, 28a,; 44-1 a) und/oder einen internen Fehlermodus (A1, A2, A3, B1, B2, B3) der Komponente (12, 14, 16, 18; 41, 42, 42-1, 42-2, 44, 44-1, 44-2, 44-3-, 46, 48) bestimmt wird.

8. Computerprogrammprodukt, insbesondere auf einem computerlesbaren Medium gespeichert oder als Signal verwirklicht, welches, wenn geladen in den Speicher eines Computers und ausgeführt von einem Computer, bewirkt, dass der Computer ein Verfahren nach einem oder mehreren der vorangegangenen Ansprüche.

9. Computer System zum Bestimmen eines pessimistischen Zeitverhaltens eines Fehlertoleranzmechanismus, das System umfassend:
eine Messvorrichtung, welche ausgebildet ist, Laufzeiten von ein oder mehreren Komponenten (12, 14, 16, 18; 41, 42, 42-1, 42-2, 44, 44-1, 44-2, 44-3-, 46, 48) eines Systems (10; 40) mit Fehlertoleranzmechanismus (14, 16; 44) in zumindest einem Durchlauf (11, 13; run₁, run₂, run₃) durch das System (10; 40) zu bestimmen;
ein Sicherheitsanalysemodell, welches ausgebildet ist, zumindest einen Fehlermodus (20a, 20b, 22a, 22b, 24a, 24b, 26a, 26b, 28a, 28b; 44-1a, 44-1b, A1, A2, A3, B1, B2, B3) für zumindest eine der Komponenten (12, 14, 16, 18; 41, 42, 42-1, 42-2, 44, 44-1, 44-2, 44-3-, 46, 48) des Systems (10; 40) zu bestimmen;
einen Prozessor, welcher ausgebildet ist, zumindest einen Messpunkt (ωᵢ) für den Durchlauf (11, 13; run₁, run₂, run₃) durch Kombination der Laufzeiten der Komponenten (12, 14, 16, 18; 41, 42, 42-1, 42-2, 44, 44-1, 44-2, 44-3-, 46, 48) mit dem zumindest einen Fehlermodus (20a, 20b, 22a, 22b, 24a, 24b, 26a, 26b, 28a, 28b; 44-1 a, 44-1b, A1, A2, A3, B1, B2, B3) zu generieren.

10. Computer System nach Anspruch 9, wobei das System weiterhin ausgebildet ist, ein Verfahren nach einem oder mehreren der Ansprüche 1 bis 8 auszuführen.
